(19) Europäisches Patentamt
European Patent Office
Office européen des brevets

(11) EP 4 269 454 A1

(12) **EUROPEAN PATENT APPLICATION**
published in accordance with Art. 153(4) EPC

(43) Date of publication:
**01.11.2023 Bulletin 2023/44**

(21) Application number: **21910992.3**

(22) Date of filing: **23.12.2021**

(51) International Patent Classification (IPC):
***C08F 220/10*** (2006.01) ***C08L 33/04*** (2006.01)
***C08L 101/00*** (2006.01) ***D06M 15/263*** (2006.01)
***A41D 31/00*** (2019.01) ***A41D 31/04*** (2019.01)
***A41D 31/10*** (2019.01)

(52) Cooperative Patent Classification (CPC):
**A41D 31/00; A41D 31/04; A41D 31/10; C08F 220/10; C08L 33/04; C08L 101/00; C09K 3/18; D06M 15/263; D06M 23/08**

(86) International application number:
**PCT/JP2021/047984**

(87) International publication number:
**WO 2022/138853 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020217682**

(71) Applicant: **DAIKIN INDUSTRIES, LTD.**
**Osaka-Shi, Osaka 530-0001 (JP)**

(72) Inventors:
- **SHIOTANI, Yuko**
  **Osaka-shi, Osaka 530-8323 (JP)**
- **IIDA, Mayumi**
  **Osaka-shi, Osaka 530-8323 (JP)**
- **AIHARA, Marina**
  **Osaka-shi, Osaka 530-8323 (JP)**
- **TANAKA, Yoshito**
  **Osaka-shi, Osaka 530-8323 (JP)**
- **HIGASHI, Masahiro**
  **Osaka-shi, Osaka 530-8323 (JP)**
- **TAKAHASHI, Kanako**
  **Osaka-shi, Osaka 530-8323 (JP)**
- **UESUGI, Norimasa**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) WATER-REPELLENT ORGANIC FINE PARTICLES HAVING SLIP PREVENTION EFFECT

(57) The present invention provides organic fine particles and a slip-resistance agent composition which are capable of providing excellent slip-resistance to a base material. Said organic fine particles contain a polymer having a repeating unit formed of: (I) a hydrophobic monomer that has a single ethylenically unsaturated double bond and at least one branched or cyclic hydrocarbon group having 3-40 carbon atoms; and, if necessary, (II) a cross-linking monomer having at least two ethylenically unsaturated double bonds. Said slip-resistance agent composition contains (A) the organic fine particles and (B) an aqueous medium.

EP 4 269 454 A1

## Description

### Technical Field

The present disclosure relates to a water-repellent organic fine particle, particularly fluorine-free organic fine particle, having a slip prevention effect.

### Background Art

Conventionally, a water-repellent agent is applied to a substrate in order to impart water-repellency to the substrate, especially to textile products such as fabric. The water-repellent agent increases the slipperiness of the fibers, which may cause misalignment of the textile products. Misalignment is likely to occur when force is applied to a textile product, for example, when sewing the textile product and when wearing the textile product. A water-repellent agent having a slip prevention effect (slip resistance) to prevent misalignment while imparting water-repellency has been studied.

Patent Literature 1 discloses that seam slippage is reduced by a water-repellent agent composition which contains an acrylic copolymer that is obtained by polymerizing 40% by weight or more but less than 80% by weight of a (meth)acrylate having an alkyl group having 12 to 24 carbon atoms and not having a cyclic structure, and 10% by weight or more but less than 50% by weight of a polymerizable monomer having an aromatic ring having 6 to 12 carbon atoms, an aromatic ring having a substituent, a cycloalkane having 5 to 12 carbon atoms or a cycloalkane having a substituent.

Although anti-slip agents have been used, the most commonly available anti-slip agents are inorganic silica-based particles. However, silica-based particles reduce water-repellency. There is a need for an anti-slip agent that provides a slip prevention effect without reducing water-repellency.

### Citation List

### Patent Literature

Patent Literature 1: WO 2015/178471

### Summary of Invention

### Technical Problem

The present disclosure provides a water-repellent organic fine particle which can give excellent slip resistance (slip prevention) to substrates.

### Solution to Problem

The present disclosure relates to an organic fine particle capable of being present on a substrate in a state of having a particle shape which, on the substrate, provides good slip resistance to the substrate. The organic fine particle can also provide good water-repellency. The organic fine particles can adhere to the substrate while having a particle shape.

In the present disclosure, the expression of slip resistance is preferably 8.0 mm or less.

In the present disclosure, the expression of water-repellency means at least any one of:

(i) when the organic fine particle is adhered to a fabric, a contact angle of water on the fabric to which the organic fine particle is adhered is 120 degrees or more;
(ii) when the organic fine particle is adhered to a fabric, a falling speed on the fabric to which the organic fine particle is adhered is 100 mm/s or more; and
(iii) when the organic fine particle is adhered to a fabric, a water-repellency test result on the fabric to which the organic fine particle is adhered is 80 points or more.

The present disclosure relates to a water-repellent composition comprising:

(A) an organic fine particle; and
(B) an aqueous medium.

The present disclosure further relates to an organic fine particle comprising a polymer comprising a repeating unit formed from:

(I) a hydrophobic monomer having one ethylenically unsaturated double bond and at least one branched or cyclic hydrocarbon group having 3 to 40 carbon atoms.

The polymer constituting the organic fine particle may comprise, in addition to the monomer (I), a repeating unit formed from:
(II) a crosslinkable monomer having at least two ethylenically unsaturated double bonds.
The polymer constituting the organic fine particle may further comprise a repeating unit formed from at least one monomer selected from the group consisting of:

(III) a reactive/hydrophilic monomer having one ethylenically unsaturated double bond and at least one reactive group and/or hydrophilic group, or a short-chain hydrocarbon-containing monomer having one ethylenically unsaturated double bond and at least one hydrocarbon group having 1 or 2 carbon atoms; and
(IV) a (meth)acrylic monomer having a linear hydrocarbon group having 3 to 40 carbon atoms or a polydimethylsiloxane group.

Preferred embodiments of the present disclosure are as follows.

Embodiment 1:

An organic fine particle capable of being present on a substrate in a state of having a particle shape, wherein the organic fine particle exhibits a slipresistant effect on the substrate.

Embodiment 2:

The organic fine particle according to embodiment 1, wherein a slip resistance on the substrate is 8.0 mm or less.

Embodiment 3:

The organic fine particle according to embodiment 1 or 2, satisfying at least any one of:

(i) when the organic fine particle is adhered to a fabric, a contact angle of water on the fabric to which the organic fine particle is adhered is 120 degrees or more;
(ii) when the organic fine particle is adhered to a fabric, a falling speed on the fabric to which the organic fine particle is adhered is 100 mm/s or more; and
(iii) when the organic fine particle is adhered to a fabric, a water-repellency test result on the fabric to which the organic fine particle is adhered is 80 points or more.

Embodiment 4:

The organic fine particle according to any one of embodiments 1 to 3, wherein a particle size of the fine particle observable on the fabric is 50 to 700 nm.

Embodiment 5:

The organic fine particle according to any one of embodiments 1 to 4, comprising a polymer comprising a repeating unit formed from:

(I) a hydrophobic monomer having one ethylenically unsaturated double bond and at least one hydrocarbon group having 3 to 40 carbon atoms.

Embodiment 6:

An organic fine particle comprising a polymer comprising a repeating unit formed from:

(I) a hydrophobic monomer having one ethylenically unsaturated double bond and at least one branched or cyclic

hydrocarbon group having 3 to 40 carbon atoms; and
(II) a crosslinkable monomer having at least two ethylenically unsaturated double bonds.

Embodiment 7:

An organic fine particle comprising a polymer comprising a repeating unit formed from:

(I) a hydrophobic monomer having one ethylenically unsaturated double bond and at least one branched or cyclic hydrocarbon group having 3 to 40 carbon atoms,

wherein a high glass transition point monomer which forms a homopolymer having a glass transition point of 100°C or more among the hydrophobic monomers (I) is 20 mol% or more.

Embodiment 8:

The organic fine particle according to any one of embodiments 5 to 7, wherein the polymer further comprises a repeating unit formed from at least one monomer selected from the group consisting of:

(III) a reactive/hydrophilic monomer having one ethylenically unsaturated double bond and at least one reactive group and/or hydrophilic group, or a short-chain hydrocarbon-containing monomer having one ethylenically unsaturated double bond and at least one hydrocarbon group having 1 or 2 carbon atoms; and/or
(IV) a (meth)acrylic monomer having a linear hydrocarbon group having 3 to 40 carbon atoms or a polydimethylsiloxane group.

Embodiment 9:

The organic fine particle according to any one of embodiments 5 to 8, wherein in the hydrophobic monomer (I), the branched hydrocarbon group has 3 to 11 carbon atoms and the cyclic hydrocarbon group has 4 to 15 carbon atoms.

Embodiment 10:

The organic fine particle according to any one of embodiments 5 to 9, wherein the hydrophobic monomer (I) is a monomer represented by the formula:

$$CH_2=C(-R^{12})-C(=O)-Y^{11}(R^{11})_k$$

or

$$CH_2=C(-R^{14})-Y^{12}(H)_{5-1}(R^{13})_1$$

wherein $R^{11}$ and $R^{13}$ are each independently a branched or cyclic hydrocarbon group having 3 to 40 carbon atoms;
$R^{12}$ and $R^{14}$ are a hydrogen atom, a monovalent organic group, or a halogen atom;
$Y^{11}$ is -O-, -, or -NR'-, wherein R' is H or a hydrocarbon group having 1 to 4 carbon atoms;
$Y^{12}$ is a benzene ring;
H is a hydrogen atom;
H and $R^{13}$ are each directly bonded to $Y^{12}$; and
k is 1 to 3 and 1 is 0 to 3,
the crosslinkable monomer (II) is a monomer represented by the formula:

formula:

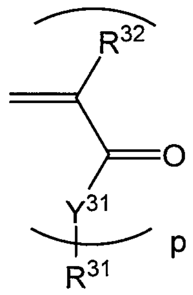

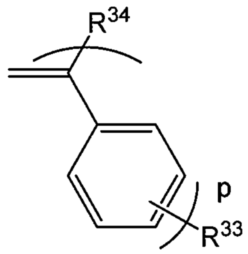

or

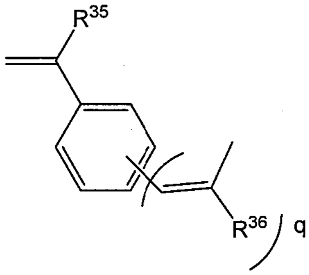

wherein $R^{31}$ and $R^{33}$ are each independently a divalent to tetravalent group composed of at least one selected from a direct bond, a hydrocarbon group having 1 to 20 carbon atoms optionally including a hydrocarbon moiety having an -OH group, $-(CH_2CH_2O)r-$ wherein r is an integer of 1 to 10, $-C_6H_4-$, -O-, or -NR'- wherein R' is H or a hydrocarbon group having 1 to 4 carbon atoms;
$R^{32}$, $R^{34}$, $R^{35}$, and $R^{36}$ are each independently a hydrogen atom, a monovalent organic group, or a halogen atom;
$Y^{31}$ is -O- or -NR'-, wherein R' is H or a hydrocarbon group having 1 to 4 carbon atoms;
p is 2 to 4; and
q is 1 to 5,
the reactive/hydrophilic monomer (III) is a monomer represented by the formula:
formula:

$$CH_2=C(-R^{42})-C(=O)-Y^{41}-(R^{43})_o(R^{41})_t$$

or

$$CH_2=C(-R^{45})-Y^{42}-(H)_{5-n}(R^{44})_u$$

wherein $R^{41}$ and $R^{44}$ are each independently a reactive group or a hydrophilic group;
$R^{42}$ and $R^{45}$ are a hydrogen atom, a monovalent organic group, or a halogen atom;
$Y^{41}$ is a direct bond, -O- or -NR'-, wherein R' is H or a hydrocarbon group having 1 to 4 carbon atoms;
$R^{43}$ is a group having a direct bond, -O-, or a divalent to tetravalent hydrocarbon group having 1 to 10 carbon atoms optionally including a hydrocarbon moiety having an -OH group;
$Y^{42}$ is a benzene ring;
H is a hydrogen atom;

H and $R^{44}$ are each directly bonded to $Y^{42}$;
t and u are 1 to 3; and
o is 0 or 1,
or
the short-chain hydrocarbon-containing monomer (III) is a monomer represented by the formula:

$$CH_2=C(-R^{47})-C(=O)-Y^{43}-R^{46}$$

wherein $R^{46}$ is a hydrocarbon group having 1 or 2 carbon atoms;
$R^{47}$ is a hydrogen atom, a monovalent organic group, or a halogen atom; and
$Y^{43}$ is a direct bond, -O- or -NR'-, wherein R' is H or a hydrocarbon group having 1 to 4 carbon atoms, and
the (meth)acrylic monomer (IV) is a (meth)acrylic monomer having a linear hydrocarbon group having 3 to 40 carbon atoms and represented by the formula:

$$CH_2=C(-R^{52})-C(=O)-Y^{51}(R^{51})_s$$

wherein $R^{51}$ is each independently a linear hydrocarbon group having 3 to 40 carbon atoms;
$R^{52}$ is a hydrogen atom, a monovalent organic group, or a halogen atom;
$Y^{51}$ is a divalent to tetravalent group composed of at least one selected from a divalent to tetravalent hydrocarbon group having 1 carbon atom (in particular - $CH_2$-, -CH=, and -C=), -$C_6H_4$-, -O-, -C(=O)-, -$S(=O)_2$-, or - NR'-, wherein R' is H or a hydrocarbon group having 1 to 4 carbon atoms, provided that the case of only a divalent hydrocarbon group is excluded; and
s is 1 to 3,
or a (meth)acrylic monomer having a polydimethylsiloxane group and represented by the formula:

$$CH_2=C(-R^{62})-C(=O)-Y^{61}-R^{61}$$

wherein $R^{61}$ is a group having a polydimethylsiloxane group;
$R^{62}$ is a hydrogen atom, a monovalent organic group, or a halogen atom; and
$Y^{61}$ is a divalent to tetravalent group composed of at least one selected from a divalent to tetravalent hydrocarbon group having 1 carbon atom, -$C_6H_4$-, -O-, - C(=O)-, -$S(=O)_2$-, or -NR'-, wherein R' is H or a hydrocarbon group having 1 to 4 carbon atoms.

Embodiment 11:

The organic fine particle according to any one of embodiments 8 to 10, wherein, in the reactive monomer (III), the reactive group is an epoxy group, a chloromethyl group, a bromomethyl group, an iodomethyl group, or a blocked isocyanate group, and the hydrophilic group is at least one group selected from the group consisting of a hydroxyl group, an amino group, including those in which H bonded to N is converted to a methyl group, an ethyl group, a propyl group, or a butyl group, a carboxylic acid group, a sulfonic acid group, a phosphoric acid group, an alkaline metal or alkaline earth metal salt group of carboxylic acid, sulfonic acid, or phosphoric acid, an ammonium salt group with a chloride, bromide or iodide ion as a counter anion, an ethylene glycol group, a polyethylene glycol group, and a group having an acetone skeleton (-C(=O)-$CH_3$), or the reactive/hydrophilic monomer (III) is a (meth)acrylamide having a short chain hydrocarbon group having 6 or less carbon atoms in a side chain.

Embodiment 12:

The organic fine particle according to any one of embodiments 5 to 11, wherein the hydrophobic monomer (I) is at least one monomer selected from the group consisting of

t-butyl (meth)acrylate, isopropyl (meth)acrylate, 2,6,8-trimethylnonan-4-yl acrylate,
isobornyl (meth)acrylate, bornyl (meth)acrylate, adamantyl (meth)acrylate, dicyclopentanyl (meth)acrylate, dicyclopentenyl (meth)acrylate, phenyl (meth)acrylate, naphthyl acrylate, benzyl acrylate,
t-butylstyrene, methylstyrene, styrene, cyclohexyl (meth)acrylate, cyclopentyl (meth)acrylate, cyclobutyl (meth)acrylate, cycloheptyl (meth)acrylate, 2,4-di-t-butylstyrene, and 2,4, 6-trimethylstyrene;
the crosslinkable monomer (II) is at least one monomer selected from the group consisting of divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol

di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecanedimethanol di(meth)acrylate, dicyclopentanyl di(meth)acrylate, and 5-hydroxy-1,3-adamantane di(meth)acrylate;

the reactive/hydrophilic monomer (III) is at least one monomer selected from the group consisting of glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, a dimethylaminoethyl (meth)acrylate quaternary compound, tetrahydrofurfuryl (meth)acrylate, polyethylene glycol (meth)acrylate, diacetone (meth)acrylamide, isopropyl (meth)acrylamide, t-butyl (meth)acrylamide, ethyl (meth)acrylamide, methyl (meth)acrylamide, and

4-hydroxymethylstyrene, 4-hydroxyethylstyrene, 4-aminomethylstyrene, 4-aminoethylstyrene, 2-(4-vinylphenyl)oxirane, and 2-(4-vinylbenzoyl)oxirane;

the short-chain hydrocarbon group-containing monomer (III) is at least one monomer selected from the group consisting of methyl methacrylate, ethyl methacrylate, $\alpha$-chloromethyl acrylate, and $\alpha$-chloroethyl acrylate; and

the (meth)acrylic monomer (IV) is at least one monomer selected from the group consisting of

stearyl (meth)acrylate, stearyl amidoethyl (meth) acrylate, $CH_2=CHC(=O)OC_2H_4NHC(=O)C_{17}H_{35}$, $CH_2=CHC(=O)OC_2H_4NHSO_2C_{18}H_{37}$, $CH_2=CHC(=O)OC_2H_4NHC(=O)OC_{18}H_{37}$, $CH_2=CHC(=O)OC_2H_4OC(=O)NHC_{18}H_{37}$, $CH_2=CHC(=O)OC_2H_4NHC(=O)NHC_{18}H_{37}$,

the formula:

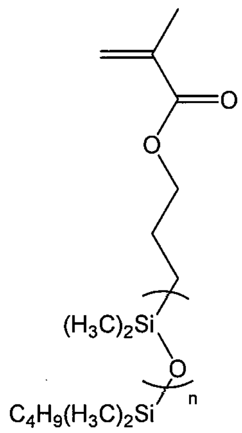

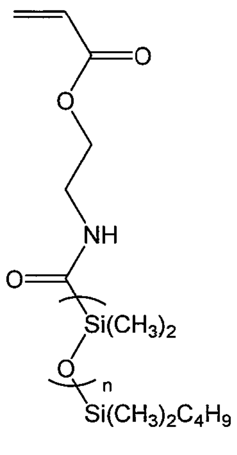

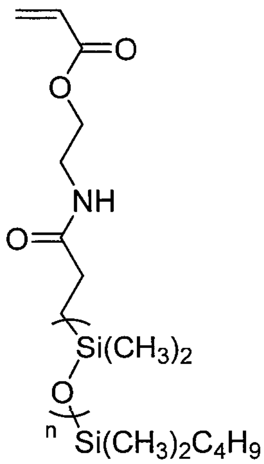

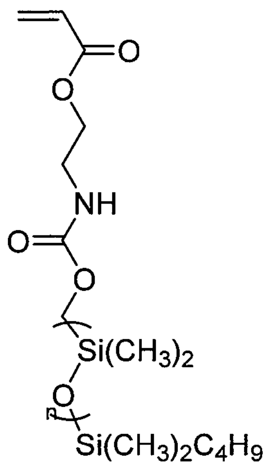

or

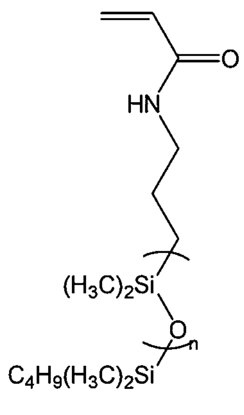

wherein n is a number of 1 to 500.

Embodiment 13:

The organic fine particle according to any one of embodiments 5 to 12, satisfying at least any one of:

(i) a molar ratio of the hydrophobic monomer (I)/the reactive/hydrophilic monomer and/or the short-chain hydrocarbon group-containing monomer (III) is 100/0 to 50/50;

(ii) the crosslinkable monomer (II) is 0.1 to 30 parts by mol based on 100 parts by mole in total of the hydrophobic monomer (I), the reactive/hydrophilic monomer and/or the short-chain hydrocarbon group-containing monomer (III),

and the (meth)acrylic monomer (IV); or
(iii) the (meth)acrylic monomer (IV) is 0 to 30 parts by mol based on 100 parts by mole in total of the hydrophobic monomer (I) and the reactive/hydrophilic monomer and/or the short-chain hydrocarbon group-containing monomer (III).

Embodiment 14:

An anti-slip agent comprising the organic fine particle according to any one of embodiments 1 to 13. Embodiment 15:
Use of the organic fine particle according to any one of embodiments 1 to 13 as an anti-slip agent. Embodiment 16:
An anti-slip agent composition comprising:

(A) the organic fine particle according to any one of embodiments 1 to 13; and
(B) an aqueous medium.

Embodiment 17:

The anti-slip agent composition according to embodiment 16, wherein an amount of the organic fine particle (A) is 50% by weight or less based on the anti-slip agent composition.

Embodiment 18:

The anti-slip agent composition according to embodiment 16 or 17, further comprising any one or more of (C) a binder resin, (D) a surfactant, and (E) a cross-linking agent.

Embodiment 19:

The anti-slip agent composition according to embodiment 18, wherein the binder resin (C) is at least one polymer selected from the group consisting of a non-fluorine polymer having a hydrocarbon group having 3 to 40 carbon atoms in a side chain and a fluorine-containing polymer having a fluoroalkyl group having 1 to 20 carbon atoms in a side chain.

Embodiment 20:

The anti-slip agent composition according to embodiment 18 or 19, wherein the binder resin (C) is an acrylic polymer, a urethane polymer, a polyolefin, a polyester, a polyether, a polyamide, a polyimide, a polystyrene, a silicone polymer, or a combination thereof.

Embodiment 21:

The anti-slip agent composition according to any one of embodiments 18 to 20, wherein a weight ratio of the binder resin (C)/the organic fine particle (A) is 20/80 to 99/1, or an amount of the binder resin (C) is 30 to 99% by weight based on a total weight of the binder resin (C) and the organic fine particle (A) of 100.

Embodiment 22:

A method for producing the anti-slip agent composition according to any one of embodiments 16 to 21, comprising:
polymerizing a monomer in an aqueous medium in the presence of a surfactant in an amount of 30 parts by weight or less based on 100 parts by weight of the monomer to obtain an aqueous dispersion of an organic fine particle (A).

Embodiment 23:

The production method according to embodiment 22, further comprising:
adding an aqueous dispersion of the binder resin (C) to an aqueous dispersion of the organic fine particle (A), or polymerizing a monomer for the binder resin in the aqueous dispersion of the organic fine particle (A) to obtain the binder resin (C), or polymerizing a monomer for the organic fine particle in the aqueous dispersion of the binder resin, to thereby obtain the aqueous dispersion in which the organic fine particle (A) and the binder resin (C) are dispersed.

Embodiment 24:

A method for treating a textile product, comprising applying a treatment liquid containing the anti-slip agent composition according to any one of embodiments 16 to 21 to the textile product.

Embodiment 25:

A textile product to which the anti-slip agent composition according to any one of embodiments 16 to 21 is applied.

Embodiment 26:

The textile product according to embodiment 25, wherein a slip resistance is 8.0 mm or less.

Embodiment 27:

The textile product according to embodiment 25 or 26, wherein the textile product is fabric for clothing, outdoor equipment, and sporting goods.

Advantageous Effects of Invention

The anti-slip agent (organic fine particle or water-repellent composition) of the present disclosure can impart excellent slip resistance to substrates such as textile products.
The anti-slip agent of the present disclosure provides excellent water-repellency (contact angle and falling speed). While conventional anti-slip agents reduce water repellency, the anti-slip agent of the present disclosure does not reduce water-repellency.

Description of Embodiments

An anti-slip agent contains an organic fine particle. The anti-slip agent may consist only of organic fine particle, or may contain other components in addition to the organic fine particle.
A water-repellent composition functions as an anti-slip agent.
The water-repellent composition (i.e., anti-slip agent) contains

(A) an organic fine particle, and
(B) an aqueous medium.

The water-repellent composition may further contain

(C) a binder resin, and/or
(D) a surfactant.

By including the binder resin (C), higher water-repellency can be obtained.
In preferred embodiments, the water-repellent composition contains the following components.

an organic fine particle (A),
an organic fine particle (A) + aqueous medium (B),
an organic fine particle (A) + aqueous medium (B) + binder resin (C),
an organic fine particle (A) + aqueous medium (B) + surfactant (D),
an organic fine particle (A) + aqueous medium (B) + binder resin (C) + surfactant (D),
an organic fine particle (A) + aqueous medium (B) + binder resin (C) + cross-linking agent (E), or
an organic fine particle (A) + aqueous medium (B) + binder resin (C) + surfactant (D) + cross-linking agent (E) .

(A) Organic fine particles

Organic fine particles act as an active ingredient that exhibits water-repellency and slip resistance. The organic fine particles are preferably formed of a non-fluorine polymer.
The average particle size of the organic fine particles may be 30 to 1000 nm, preferably 40 to 700 nm or 45 to 300 nm from the viewpoint of water-repellency and stability of the aqueous dispersion. The average particle size means

the average particle size of particles measured by a dynamic light scattering (DLS).

The organic fine particles have a particle shape on the substrate and exhibit water-repellency and slip resistance.

The exhibited slip resistance is improved by 0.5 mm or more in the value of the slippage resistance test when the organic fine particles are adhered to the fabric as compared with the case where only the water-repellent agent without fluorine is used, and for example, when the value of the sliding resistance test of the fabric to which only the water-repellent agent containing no organic fine particles is adhered is 9.5 mm, the slip resistance is preferably 9.0 mm or less, 8.5 mm or less, still more preferably 8.0 mm or less, still more preferably 7.0 mm or less, and 6.0 mm or less. Further, the slip resistance is preferably 8.0 mm or less, more preferably 7.0 mm or less, 6.0 mm or less, and still more preferably 4.0 mm or less, as a value of the slippage resistance test, not in comparison with the case where the organic fine particles are not adhered.

The value of the slippage resistance test indicating the slip resistance may be 8.0 mm or less, 6.0 mm or less, 4.0 mm or less, 3.0 mm or less, 2.0 mm or less, 1.5 mm or less or 1.0 mm or less (lower limit 0 mm). The slip resistance is measured in accordance with JIS L 1096 (seam slippage B method). Specifically, the slip resistance during the adhesion of organic fine particles is conducted in accordance with JIS L 1096 (seam slippage B method) by immersing a fabric, for example, a PET fabric (white) in a composition containing organic fine particles, passing the PET fabric through a mangle and then a pin tenter at 170°C for 1 minute to prepare a PET fabric to which the organic fine particles are adhered. A polyester fabric (white) treated with a water-repellent agent was cut into five test pieces of 10 cm × 17 cm in each of a longitudinal direction and a lateral direction, the test piece was folded in half with the front face inside, and cut along the folding line, and the cut pieces were stitched together at 1 cm apart from the cut end with a normal sewing-machine needle #11, and a lockstitch seam system was employed, the number of seams per cm was set to 5, and a yarn of polyester filaments 78 dex × 3 was used. A grab method was carried out using a tensile tester, and in the grab method, the test piece was clamped at a clamp distance of 7.62 cm, and a predetermined load (49.0 N (5 kgf)) was applied at a tension speed of 30 cm per minute, and thereafter, the test piece was removed from the clamp, and the maximum pore size (mm) in slippage of a load at which slacks in the vicinity of seams were eliminated after standing for 1 hour was measured.

It is most preferable that the slip resistance (that is, the value of the slippage resistance test) is equivalent to that of an untreated fabric, that is, 2.0 mm or less, but the slip resistance is improved by 0.5 mm or more in the value of the slippage resistance test as compared with the case where only the water-repellent agent without fluorine is used, still more preferably 8.0 mm or less, 7.0 mm or less, and 6.0 mm or less, for example, 5.0 mm or less.

The expression of water-repellency means

(i) when the organic fine particle is adhered to a fabric, a contact angle of water on the fabric to which the organic fine particle is adhered is 120 degrees or more, or
(ii) when the organic fine particle is adhered to a fabric, a falling speed on the fabric to which the organic fine particle is adhered is 100 mm/s or more, or
(iii) when the organic fine particle is adhered to a fabric, a water-repellency test result on the fabric to which the organic fine particle is adhered is 80 points or more.

The contact angle of water on a fabric to which the composition containing the organic fine particles is adhered (that is, the contact angle of water on the fabric to which the organic fine particles are adhered or the contact angle of water on the fabric to which the organic fine particles and the binder (and other components) are adhered) is preferably 120 degrees or more, more preferably 130 degrees or more, and still more preferably 140 degrees or more. Specifically, the contact angle of water on a fabric is determined by immersing a PET fabric (weight: 88 g/m$^2$, 70 denier, gray) in a composition containing organic fine particles, passing the PET fabric through a mangle and then a pin tenter at 170°C for 1 minute to prepare a PET fabric to which the organic fine particles are adhered, dropping 2 μL of water onto the PET fabric, and measuring the static contact angle 1 second after the dropping using a fully automatic contact angle meter (DropMaster 701, manufactured by Kyowa Interface Science Co., Ltd.).

In the fabric (PET fabric), the falling speed of water is preferably 100 mm/s or more, for example, 130 mm/sec or more, and still more preferably 150 mm/sec or more or 200 mm/sec or more. The falling speed is the average falling speed at a distance of about 40 mm in which 20 μL of water is dropped from a microsyringe onto a substrate having an inclination of 30 degrees. Specifically, the average falling speed at a distance of about 40 mm is determined by immersing a PET fabric (weight: 88 g/m$^2$, 70 denier, gray) in a composition containing organic fine particles, passing the PET fabric through a mangle and then a pin tenter at 170°C for 1 minute to prepare a PET fabric to which the organic fine particles are adhered, dropping 20 μL of water from a microsyringe onto the PET fabric having an inclination of 30 degrees using a fully automatic contact angle meter (DropMaster 701, manufactured by Kyowa Interface Science Co., Ltd.), and measuring the falling of the dropped water using a high-speed camera (VW-9000 manufactured by Keyence Co., Ltd.), and the value determined is taken as the falling speed.

The water-repellency test is preferably 80 points or more or 90 points or more.

The water-repellency test is performed according to the spray method of JIS-L-1092 (AATCC-22). Details of the water-repellency test are described in the Examples herein.

The unevenness of the fine particles on the substrate can be observed with a laser microscope or a scanning electron microscope. Before and after heating (for example, at 170°C for 1 minute) after coating the particles on the substrate, the average diameter (average particle size) of the particles after heating is preferably 50% or more, and more preferably 60% or more of that before heating. Alternatively, the average particle size of the fine particles observable on the fabric is preferably 30 to 1000 nm, more preferably 40 to 700 nm or 50 to 500 nm. In general, the average particle size is preferably an average particle size after heating (at 170°C for 1 minute) after coating the particles on the substrate.

In some embodiments, the organic fine particle contains a polymer having a repeating unit formed from

(I) a hydrophobic monomer having one ethylenically unsaturated double bond and at least one branched or cyclic hydrocarbon group having 3 to 40 carbon atoms,
wherein the polymer may or may not further have a repeating unit formed from
(II) a crosslinkable monomer having at least two ethylenically unsaturated double bonds.
In some embodiments, the organic fine particle further contains a polymer having a repeating unit formed from
(III) a reactive/hydrophilic monomer having one ethylenically unsaturated double bond and at least one reactive group and/or hydrophilic group, or a short-chain hydrocarbon-containing monomer having one ethylenically unsaturated double bond and at least one hydrocarbon group having 1 or 2 carbon atoms; and/or
(IV) a (meth)acrylic monomer having a linear hydrocarbon group having 3 to 40 carbon atoms or a polydimethylsiloxane group.

Each of the monomers (I) to (IV) (and other monomer (V)) may have two or more monomers.

The polymer constituting the organic fine particles is preferably a non-fluorine polymer.

(I) Hydrophobic monomer

The hydrophobic monomer (I) has at least one ethylenically unsaturated double bond and at least one branched or cyclic hydrocarbon group having 3 to 40 carbon atoms.

The hydrophobic monomer (I) preferably has a branched hydrocarbon group (for example, branched alkyl group), particularly a t-butyl group or an isopropyl group, or a group with a multibranched structure as shown in the following formula:

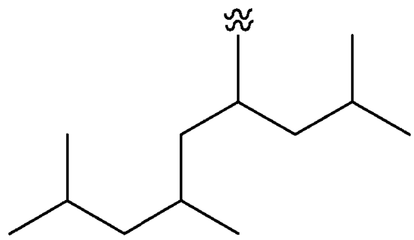

The hydrophobic monomer (I) is preferably an acrylate compound, an acrylamide compound, or a styrene compound containing a branched or cyclic hydrocarbon group having 3 to 40 carbon atoms. That is, the hydrophobic monomer (I) is preferably an acrylate compound containing a branched or cyclic hydrocarbon group having 3 to 40 carbon atoms, an acrylamide compound containing a branched or cyclic hydrocarbon group having 3 to 40 carbon atoms, or a styrene compound containing a branched or cyclic hydrocarbon group having 3 to 40 carbon atoms (excluding a benzene ring). The hydrophobic monomer (I) is preferably a fluorine-free monomer.

The hydrophobic monomer (I) is preferably a monomer represented by the formula:

$$CH_2=C(-R^{12})-C(=O)-Y^{11}(R^{11})_k$$

or

$$CH_2=C(-R^{14})-Y^{12}(H)_{5-1}(R^{13})_1$$

wherein $R^{11}$ and $R^{13}$ are each independently a branched or cyclic hydrocarbon group having 3 to 40 carbon atoms;
$R^{12}$ and $R^{14}$ are a hydrogen atom, a monovalent organic group, or a halogen atom;

$Y^{11}$ is -O-, or -NR'-, wherein R' is H or a hydrocarbon group having 1 to 4 carbon atoms, or a divalent to tetravalent linking group having at least one group selected from -O- or -NR'-;
$Y^{12}$ is a benzene ring;
H is a hydrogen atom;
H and $R^{13}$ are each directly bonded to $Y^{12}$; and
k is 1 to 3 and 1 is 1 to 5.

$R^{11}$ and $R^{13}$ are a branched or cyclic hydrocarbon group. The branched hydrocarbon group (for example, having 3 to 11 (particularly 3 to 8 or 4 to 6) or 12 to 30 carbon atoms) is preferably an aliphatic hydrocarbon group, particularly a saturated aliphatic hydrocarbon group, especially an alkyl group. The cyclic hydrocarbon group may be an aliphatic hydrocarbon group, in particular a saturated aliphatic hydrocarbon group, an aromatic hydrocarbon group or an araliphatic hydrocarbon group. The $-CH_3$ group has a lower surface free energy than the $-CH_2$ group and tends to exhibit water-repellency. Therefore, a structure having many branches and many $-CH_3$ groups is preferred. In the branched hydrocarbon group, the number of $-CH_3$ groups is preferably 2 to 15, for example, 3 to 10, 3 to 9, 4 to 8, or 4 to 6.

The branched hydrocarbon group (for example, a branched alkyl group) may be an alkyl group having 3 or 4 carbon atoms, particularly a t-butyl group or an isopropyl group, or a hydrocarbon group having a multibranched structure having 5 to 30 carbon atoms (particularly an alkyl group), for example, a group having a multi-branched structure represented by the following formula:

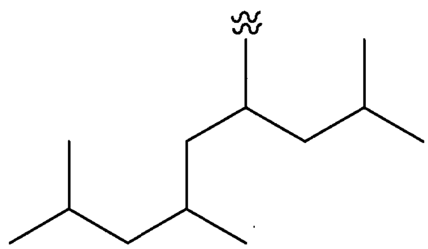

The cyclic hydrocarbon group may be a saturated or unsaturated monocyclic group, polycyclic group, bridged cyclic group, or the like. The cyclic hydrocarbon group is preferably saturated. The cyclic hydrocarbon group preferably has 4 to 20 (for example, 6 to 15 or 6 to 10) carbon atoms. Examples of the cyclic hydrocarbon group include a cyclic aliphatic group having 4 to 20 carbon atoms, particularly 5 to 12 carbon atoms, an aromatic group having 6 to 20 carbon atoms, and an aromatic aliphatic group having 7 to 20 carbon atoms. The cyclic hydrocarbon group may have 15 or less carbon atoms, such as 10 or less. The carbon atom in the ring of the cyclic hydrocarbon group may be directly bonded to the ester group in the (meth)acrylate group, or may be bonded via a hydrocarbon spacer. In $R^{11}$, the cyclic hydrocarbon group is preferably a saturated cyclic aliphatic group.

Specific examples of the cyclic hydrocarbon group include a cyclohexyl group, a cyclopentyl group, a cyclobutyl group, a dicyclopentanyl group, a dicyclopentenyl group, an adamantyl group, an isobornyl group, a naphthalene group, a bornyl group, a tricyclodecanyl group, a phenyl group, a biphenyl group, and a triphenyl group.

$R^{12}$ and $R^{14}$ may be a hydrogen atom, a methyl group, a halogen atom, a substituted or unsubstituted benzyl group, a substituted or unsubstituted phenyl group, or a $-CF_3$ group. Examples of $R^{12}$ and $R^{14}$ include a hydrogen atom, a methyl group, a chlorine atom, a bromine atom, an iodine atom, and a cyano group. $R^{12}$ and $R^{14}$ are preferably a hydrogen atom, a methyl group, or a chlorine atom. $R^{12}$ is more preferably a methyl group. When $R^{12}$ is a methyl group, higher slip resistance can be obtained. $R^{14}$ is preferably a hydrogen atom particularly from the viewpoint of reactivity.

$Y^{11}$ is preferably a divalent group. $Y^{11}$ is preferably -O- or -NH-.

$Y^{12}$ is a benzene ring. The monomer having $Y^{12}$ has a styryl group. In the monomer having $Y^{12}$, one to three $R^{13}$ groups and 2 to 4 hydrogen atoms are bonded to the benzene ring.

k is preferably 1.

1 may be 1 to 3, but is preferably 1 or 2.

The hydrophobic monomer may be a combination of a monomer having a branched hydrocarbon group and a monomer having a cyclic hydrocarbon group, or a combination of a monomer having a monocyclic cyclic hydrocarbon group and a monomer having a polycyclic or bridged cyclic hydrocarbon group. In the hydrophobic monomer, the weight ratio of the monomer having a branched hydrocarbon group to the monomer having a cyclic hydrocarbon group, and the weight ratio of the monomer having a monocyclic cyclic hydrocarbon group to the monomer having a polycyclic or bridged cyclic hydrocarbon group may be 10/90 to 90/10, 30/70 to 70/30, or 40/60 to 60/40.

Specific examples of the hydrophobic monomer are as follows. Although compounds of the following chemical formulas are acryl compounds having a hydrogen atom at the $\alpha$-position, specific examples may include methacrylic compounds having a methyl group at the $\alpha$-position and $\alpha$-chloracrylic compounds having a chlorine atom at the $\alpha$-

position, and preferred are methacrylic compounds having a methyl group at the α-position. Also in the styrene derivative, although compounds of the following chemical formulas are acryl compounds having a hydrogen atom at the α-position, specific examples may include α-methylstyrene compounds having a methyl group at the α-position and α-chlorostyrene compounds having a chlorine atom at the α-position, and preferred are styrene compounds having a hydrogen atom at the α-position.

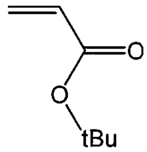

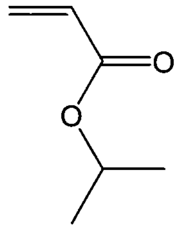

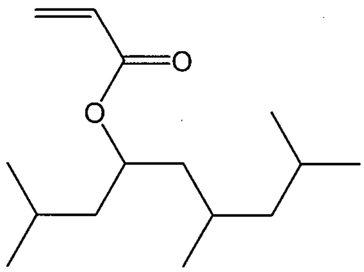

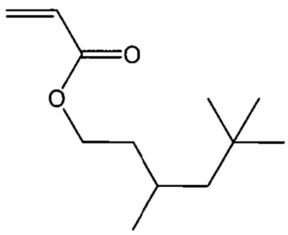

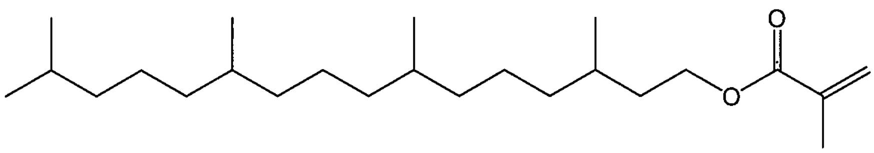

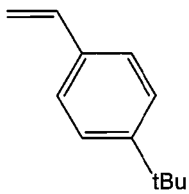

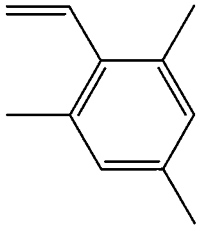

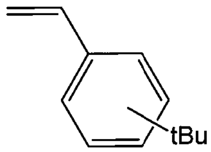

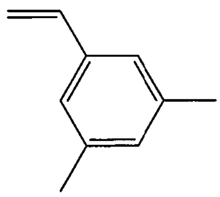

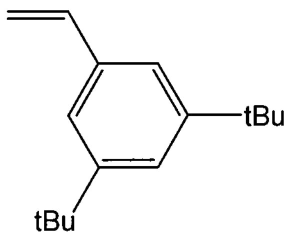

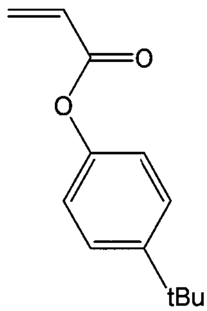

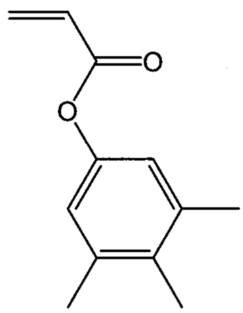

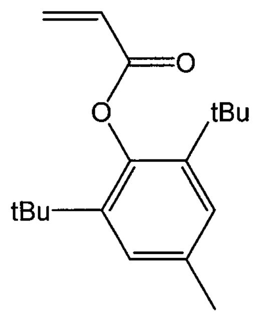

wherein tBu is t-butyl.

Specific examples of the monomer having a cyclic hydrocarbon group include cyclobutyl (meth)acrylate, cyclopropyl (meth)acrylate, cyclopentyl (meth)acrylate, cyclohexyl (meth)acrylate, cycloheptyl (meth)acrylate, cyclooctyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, and 2-ethyl-2-adamantyl (meth)acrylate.

Preferred specific examples of the hydrophobic monomer (I) include t-butyl (meth)acrylate, t-butylstyrene, methylstyrene, styrene, isopropyl (meth)acrylate, 2,6,8-trimethylnonan-4-yl acrylate, 2,4-di-t-butylstyrene, 2,4,6-trimethylstyrene, cyclobutyl (meth)acrylate, cyclopropyl (meth)acrylate, cyclopentyl (meth)acrylate, cyclohexyl (meth)acrylate, cycloheptyl (meth)acrylate, cyclooctyl (meth)acrylate, isobornyl (meth)acrylate, 4-t-butylphenyl (meth)acrylate, and 2,3,4-methylphenyl (meth)acrylate.

More preferred specific examples of the hydrophobic monomer (I) include t-butyl (meth)acrylate, isobornyl methacrylate, cyclohexyl methacrylate, t-butylstyrene, cyclopentyl (meth)acrylate, cycloheptyl (meth)acrylate, adamantyl (meth)acrylate, and 2-ethyl-2-adamantyl (meth)acrylate.

The hydrophobic monomer (I) may be a high glass transition point monomer (high Tg monomer). When the organic fine particles do not contain the crosslinkable monomer (II), the hydrophobic monomer (I) is preferably a high Tg monomer. The term "high Tg monomer" refers to a monomer of which homopolymer has a Tg of 50°C or more. Among the monomers (I), the high Tg monomer (I-a) has a glass transition point of 50°C or more, preferably 100°C or more. The glass transition point of the homopolymer may be, for example, 120°C or more, in particular 150°C or more, or 250°C or less.

The glass transition point (glass transition temperature) of the homopolymer was calculated by differential scanning calorimetry (DSC). The glass transition point can be determined by obtaining a DSC curve by raising the temperature of a sample 10 mg at 10°C/min, and determining the temperature indicated by the midpoint of the intersection between the extension of the baseline before and after the second order transition of the DSC curve and the tangent at the inflection point of the DSC curve. The organic fine particles may contain, as the hydrophobic monomer, only one kind of monomer or two or more kinds monomers, and may each independently contain a hydrophobic monomer (I-a) having a high Tg and/or a hydrophobic monomer (I) not having a high Tg.

The high glass transition point monomer may be a monomer represented by the formula:

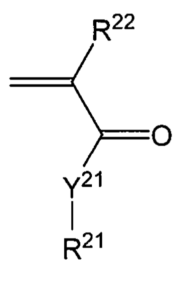

or

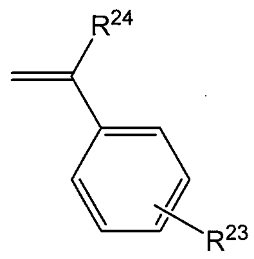

wherein $R^{21}$ and $R^{23}$ are a group composed of at least one selected from a hydrocarbon group having 1 to 30 carbon atoms, $-C_6H_4-$, -O-, or -NR'-, wherein R' is H or a hydrocarbon group having 1 to 4 carbon atoms;
$R^{22}$ and $R^{24}$ are a hydrogen atom, a monovalent organic group, or a halogen atom; and
$Y^{21}$ is -O- or -NR'-, wherein R' is H or a hydrocarbon group having 1 to 4 carbon atoms.

Examples of $R^{21}$ and $R^{23}$ includes a cyclohexyl group, a dicyclopentanyl group, a dicyclopentenyl group, an adamantyl group, an isobornyl group, a naphthalene group, a bornyl group, a tricyclodecanyl group, and a phenyl group.
$R^{22}$ and $R^{24}$ may be a hydrogen atom, a methyl group, a halogen atom excluding a fluorine atom,, a substituted or unsubstituted benzyl group, a substituted or unsubstituted phenyl group, or a $-CF_3$ group. Examples of $R^{22}$ and $R^{24}$ include a hydrogen atom, a methyl group, a chlorine atom, a bromine atom, an iodine atom, a fluorine atom, $-CF_3$ group, and a cyano group. $R^{22}$ and $R^{24}$ are preferably a hydrogen atom, a methyl group, or a chlorine atom. $R^{22}$ is more preferably a methyl group. When $R^{22}$ is a methyl group, higher water-repellency and higher slip resistance can be obtained. On the other hand, $R^{24}$ is preferably a hydrogen atom particularly from the viewpoint of reactivity, but is preferably a methyl group from the viewpoint of water-repellency and slip resistance, and $R^{24}$ is preferably selected so as to satisfy both the reactivity and water-repellency.
$Y^{21}$ is preferably -O- or -NH-.
Specific examples of the high glass transition point monomer include acrylate esters such as cyclohexyl (meth)acrylate, isobornyl (meth)acrylate, bornyl (meth)acrylate, adamantyl (meth)acrylate, dicyclopentanyl (meth)acrylate, dicyclopentenyl (meth)acrylate, tricyclodecanyl (meth)acrylate, phenyl (meth)acrylate, naphthyl (meth)acrylate, benzyl (meth)acrylate, 2-t-butylphenyl (meth)acrylate and naphthyl (meth)acrylate, and styrene, $\alpha$-methylstyrene, and styrene derivatives.

(II) Crosslinkable monomer

The crosslinkable monomer (II) is a compound having at least two (particularly two, three or four) ethylenically unsaturated double bonds. The crosslinkable monomer (II) is preferably a fluorine-free monomer.
The crosslinkable monomer (II) is preferably a monomer represented by the formula:

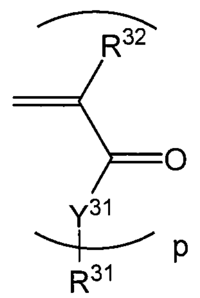

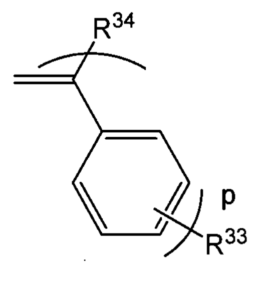

or

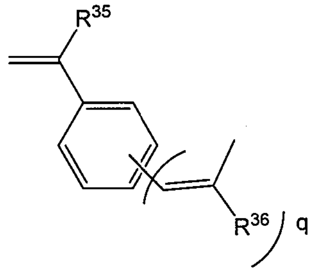

wherein $R^{31}$ and $R^{33}$ are each independently a divalent to tetravalent group composed of at least one selected from a direct bond, a hydrocarbon group having 1 to 20 carbon atoms optionally including a hydrocarbon moiety having an -OH group, $-(CH_2CH_2O)_r-$ wherein r is an integer of 1 to 10, $-C_6H_4-$, -O-, or -NR'- wherein R' is H or a hydrocarbon group having 1 to 4 carbon atoms;
$R^{32}$, $R^{34}$, $R^{35}$, and $R^{36}$ are each independently a hydrogen atom, a monovalent organic group, or a halogen atom;
$Y^{31}$ is -O- or -NR'-, wherein R' is H or a hydrocarbon group having 1 to 4 carbon atoms;
p is 2 to 4; and
q is 1 to 5.

Examples of $R^{31}$ and $R^{33}$ are a direct bond, a divalent to tetravalent (for examples, divalent to trivalent) hydrocarbon group having 1 to 20 (or 2 to 10) carbon atoms which may be interrupted by an oxygen atom and/or whose hydrogen atom may be substituted by an OH group, an ethylene glycol group, a propylene glycol group, a glycerol group, a cyclohexyl group, a dicyclopentanyl group, an adamantyl group, an isobornyl group, a naphthalene group, a bornyl group, a tricyclodecanyl group, and a phenyl group, or a group containing any of these groups. $R^{31}$ and $R^{33}$ may be a polymer group, and the constituent unit constituting the polymer group may be the group exemplified above (for example, an ethylene glycol group). $R^{31}$ and $R^{33}$ are preferably a divalent group.
$Y^{31}$ is preferably -O- or -NH-.
$R^{32}$, $R^{34}$, $R^{35}$, and $R^{36}$ may each independently be a hydrogen atom, a methyl group, a halogen atom, a substituted or unsubstituted benzyl group, or a substituted or unsubstituted phenyl group, or may be a $-CF_3$ group. Examples of $R^{32}$, $R^{34}$, $R^{35}$, and $R^{36}$ include a hydrogen atom, a methyl group, a chlorine atom, a bromine atom, an iodine atom, a fluorine atom, $-CF_3$ group, and a cyano group. $R^{32}$, $R^{34}$, $R^{35}$, and $R^{36}$ are preferably a hydrogen atom, a methyl group, or a chlorine atom. $R^{32}$ is more preferably a methyl group. When $R^{32}$ is a methyl group, higher water-repellency and higher slip resistance can be obtained. $R^{34}$, $R^{35}$, and $R^{36}$ are preferably a hydrogen atom particularly from the viewpoint of reactivity.
p may be 2 or 3, in particular 2.
q may be 1 to 3, in particular 1.
Specific examples of the crosslinkable monomer (II) include divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecane dimethanol di(meth)acrylate, dicyclopentanyl di(meth)acrylate, and 5-hydroxy-1,3-adamantane di(meth)acrylate.
The crosslinkable monomer (II) is preferably di(meth)acrylate compound or divinylbenzene.

(III) Reactive/hydrophilic monomer or short-chain hydrocarbon group-containing monomer

The reactive/hydrophilic monomer (III) has one ethylenically unsaturated double bond and at least one reactive and/or hydrophilic group. The short-chain hydrocarbon group-containing monomer (III) has one ethylenically unsaturated double bond and at least one hydrocarbon group having 1 or 2 carbon atoms.
Examples of the reactive group include an epoxy group (for example, glycidyl group), a chloromethyl group, a bromomethyl group, an iodomethyl group, and a blocked isocyanate group.
Examples of the hydrophilic group include a hydroxyl group, an amino group, including those in which H bonded to N is converted to a methyl group, an ethyl group, a propyl group, or a butyl group, a carboxylic acid group, a sulfonic acid group, a phosphoric acid group, an alkaline metal or alkaline earth metal salt group of carboxylic acid, sulfonic acid, or phosphoric acid, an ammonium salt group with a chloride, bromide or iodide ion as a counter anion, an ethylene glycol group, a polyethylene glycol group, and a group having an acetone skeleton $(-C(=O)-CH_3)$.

The reactive/hydrophilic monomer (III) includes not only the reactive groups and hydrophilic groups described above, but also compounds having a group that imparts higher hydrophilicity than the hydrophobic monomer (I). The reactive/hydrophilic monomer (III) has an octanol/water partition coefficient such that the reactive/hydrophilic monomer (III) is more distributed in water than the hydrophobic monomer (I), and includes those that do not contain the reactive groups and hydrophilic groups described above. Examples thereof include (meth)acrylamides having short-chain hydrocarbon groups having 6 or less carbon atoms in a side chain. Specific examples thereof include methyl (meth)acrylamide, ethyl (meth)acrylamide, n-butyl (meth)acrylamide, t-butyl (meth)acrylamide, propyl (meth)acrylamide, and isopropyl (meth)acrylamide.

The reactive/hydrophilic monomer (III) is preferably a fluorine-free monomer.

The reactive/hydrophilic monomer (III) is preferably a monomer represented by the formula:

$$CH_2=C(-R^{42})-C(=O)-Y^{41}-(R^{43})_o(R^{41})_t$$

or

$$CH_2=C(-R^{45})-Y^{42}-(H)_{5-n}(R^{41})_u$$

wherein $R^{41}$ and $R^{44}$ are each independently a reactive group or a hydrophilic group;
$R^{42}$ and $R^{45}$ are a hydrogen atom, a monovalent organic group, or a halogen atom;
$Y^{41}$ is a direct bond, -O- or -NR'-, wherein R' is H or a hydrocarbon group having 1 to 4 carbon atoms;
$R^{43}$ is a group having a direct bond, -O-, or a divalent to tetravalent hydrocarbon group having 1 to 10 carbon atoms optionally including a hydrocarbon moiety having an -OH group;
$Y^{42}$ is a benzene ring;
H is a hydrogen atom;
H and $R^{44}$ are each directly bonded to $Y^{42}$;
t and u are 1 to 3; and
o is 0 or 1.
the short-chain hydrocarbon group-containing monomer (III) is preferably a monomer represented by the formula:

$$CH_2=C(-R^{47})-C(=O)-Y^{43}-R^{46}$$

wherein $R^{46}$ is a hydrocarbon group having 1 or 2 carbon atoms;
$R^{47}$ is a hydrogen atom, a monovalent organic group, or a halogen atom; and
$Y^{43}$ is a direct bond, -O- or -NR'-, wherein R' is H or a hydrocarbon group having 1 to 4 carbon atoms.

$R^{41}$ and $R^{44}$ are monovalent groups. Examples of the reactive group or hydrophilic group in $R^{41}$ and $R^{44}$ are as described above (such as an epoxy group, a hydroxyl group or the like).

$R^{46}$ is a hydrocarbon group having 1 or 2 carbon atoms, examples of which include a methyl group and an ethyl group. Preferred is a methyl group.

$R^{42}$, $R^{45}$, and $R^{47}$ may be a hydrogen atom, a methyl group, a halogen atom, a substituted or unsubstituted benzyl group, a substituted or unsubstituted phenyl group, or a $-CF_3$ group. Examples of $R^{42}$, $R^{45}$, and $R^{47}$ include a hydrogen atom, a methyl group, a chlorine atom, a bromine atom, an iodine atom, a fluorine atom, $-CF_3$ group, and a cyano group. $R^{42}$, $R^{45}$, and $R^{47}$ are preferably a hydrogen atom, a methyl group, or a chlorine atom. $R^{42}$ and $R^{47}$ are more preferably a methyl group. When $R^{42}$ and $R^{47}$ are a methyl group, higher water-repellency and higher slip resistance can be obtained. $R^{45}$ is preferably a hydrogen atom particularly from the viewpoint of reactivity.

$Y^{41}$ and $Y^{43}$ are preferably -O- or -NH-.

$R^{43}$ is preferably a divalent to tetravalent hydrocarbon group having 1 to 10 carbon atoms optionally including a hydrocarbon moiety having an -OH group. Examples of the divalent to tetravalent hydrocarbon group having 1 carbon atom include $-CH_2-$, -CH= having a branched structure, and -C= having a branched structure. $R^{43}$ is a divalent alkylene group, for example, $-(CH_2)_r-$, wherein r is a number of 1 to 5, or a divalent, trivalent, or tetravalent alkyl group, for example, $-(CH_2)_r-(CH-)_s-H$, wherein r is a number of 1 to 5, and s is 1, 2 or 3. Position of the $CH_2$ group and CH- group may not be in the order described. A divalent alkylene group (for example, having 1 to 4 carbon atoms) is more preferred.

$Y^{42}$ is a benzene ring. The monomer having $Y^{42}$ has a styryl group. In the monomer having $Y^{42}$, one to three $R^{44}$ groups and 2 to 4 hydrogen atoms are bonded to the benzene ring.

o is preferably 1.

t is preferably 1.

u may be 1 to 3, but is preferably 1 or 2.

Specific examples of the reactive/hydrophilic monomer (III) include glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, dimethylaminoethyl (meth)acrylate quaternary products, tetrahydrofurfuryl (meth)acrylate, polyethylene glycol (meth)acrylate, diacetone (meth)acrylamide, isopropyl (meth)acrylamide, t-butyl (meth)acrylamide, ethyl (meth)acrylamide, methyl (meth)acrylamide; and 4-hydroxymethylstyrene, 4-hydroxyethylstyrene, 4-aminomethylstyrene, 4-aminoethylstyrene, 2-(4-vinylphenyl)oxirane, and 2-(4-vinylbenzoyl)oxirane.

Specific examples of the short-chain hydrocarbon group-containing monomer (III) include methyl (meth)acrylate, ethyl (meth)acrylate, $\alpha$-chloromethyl acrylate, and $\alpha$-chloroethyl acrylate.

(IV) (meth)acrylic monomer

The (meth)acrylic monomer (IV) has a linear hydrocarbon group having 3 to 40 carbon atoms or a polydimethylsiloxane group.

The (meth)acrylic monomer (IV) may be a (meth)acrylic monomer having a linear hydrocarbon group having 3 to 40 carbon atoms.

The (meth)acrylic monomer (IV) is preferably a monomer represented by the formula:

$$CH_2=C(-R^{52})-C(=O)-Y^{51}(R^{51})_s$$

wherein $R^{51}$ is each independently a linear hydrocarbon group having 3 to 40 carbon atoms;
$R^{52}$ is a hydrogen atom, a monovalent organic group, or a halogen atom;
$Y^{51}$ is a divalent to tetravalent group composed of at least one selected from a divalent to tetravalent hydrocarbon group having 1 carbon atom, (in particular - $CH_2$-, -CH=, and -C≡), -$C_6H_4$-, -O-, -C(=O)-, -$S(=O)_2$-, or - NR'-, wherein R' is H or a hydrocarbon group having 1 to 4 carbon atoms, provided that the case of only a divalent hydrocarbon group is excluded; and
s is 1 to 3.

$R^{51}$ is a linear hydrocarbon group. $R^{51}$ preferably has 12 to 24 or 16 to 22 carbon atoms. Specific examples of $R^{51}$ include n-lauryl, n-stearyl, and n-behenyl.

s is 1, 2, or 3. s is preferably 1 or 2.

s is 1, 2, or 3. When $Y^{51}$ has a tetravalent hydrocarbon group having 1 carbon atom (specifically, -C= having a branched structure), s is 3. When $Y^{51}$ has a trivalent hydrocarbon group having 1 carbon atom (for example, -CH= having a branched structure), s is 2. When $Y^{51}$ does not have a trivalent and tetravalent hydrocarbon group having 1 carbon atom (for example, when $Y^{51}$ has a divalent hydrocarbon group having 1 carbon atom (-$CH_2$-) (for example, 1 to 6)), s is 1.

$R^{52}$ may be a hydrogen atom, a methyl group, a halogen atom, a substituted or unsubstituted benzyl group, a substituted or unsubstituted phenyl group, or a -$CF_3$ group. Examples of $R^{52}$ may include a hydrogen atom, a methyl group, a chlorine atom, a bromine atom, an iodine atom, and a cyano group. $R^{52}$ are preferably a hydrogen atom, a methyl group, or a chlorine atom. $R^{52}$ is more preferably a methyl group. Since $R^{52}$ is a methyl group, higher slip resistance can be obtained.

$Y^{51}$ is preferably a divalent group or a trivalent group, particularly preferably a divalent group.

Examples of the divalent to tetravalent hydrocarbon group having 1 carbon atom include -$CH_2$-, -CH= having a branched structure, and -C= having a branched structure.

When $Y^{51}$ is a divalent group, $Y^{51}$ may have or may not have -$CH_2$-. When $Y^{51}$ is a trivalent group, $Y^{51}$ preferably has -CH= which is a branched structure, and particularly preferably has

$$-CH_2-(-H(C-)-)-CH_2-,$$

that is,

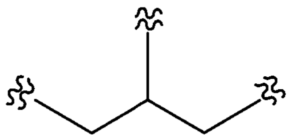

$Y^{51}$ may be -Y'-, -Y'-Y'-, -Y'-C(=O)-, -C(=O)-Y'-, - Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'-,

wherein Y' is each independently a direct bond, -O-, -NR'-, wherein R' is H or a hydrocarbon group having 1 to 4 carbon atoms, or $-S(=O)_2-$;
X' is $-(CH_2)_m-$, wherein m is an integer of 1 to 5, a linear hydrocarbon group having 1 to 5 carbon atoms and an unsaturated bond, a hydrocarbon group having 1 to 5 or 3 to 5 carbon atoms and a branched structure, or $-(CH_2)_l-C_6H_4-(CH_2)_l-$, wherein 1 is each independently an integer of 0 to 5, and $-C_6H_4-$ is a phenylene group.

The hydrocarbon group having a branched structure having 3 to 5 carbon atoms may be divalent, trivalent, or tetravalent. Specific examples of the hydrocarbon group having a branched structure having 3 to 5 carbon atoms include:

$-CH(CH_3)-CH_2-$ (divalent),

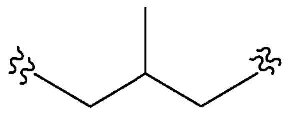

(divalent)

$-CH_2-(-H(C-)-)-CH_2-$ (trivalent),
that is,

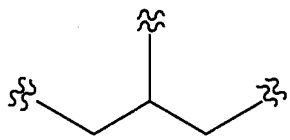

Specific examples of $Y^{51}$ which is a divalent group include [ref1] $-NH-(CH_2)_m-NH-C(=O)-NH-$, $-NH-(CH_2)_m-O-C_6H_4-$, or $-NH-(CH_2)_m-NH-C_6H_4-$, wherein m is an integer of 1 to 5, in particular 2 or 4.

$Y^{51}$ which is a divalent group is preferably -O-, - NH-, -O-(CH2)m-O-C(=O)-, $-O-(CH_2)_m-NH-C(=O)-$, $-O-(CH_2)_m-O-C(=O)-NH-$, $-O-(CH_2)_m-NH-C(=O)-O-$, -O-(CH2)$_m$-NH-C(=O)-NH-, $-O-(CH_2)_m-NH-S(=O)_2-$ or-O-$(CH_2)_m-S(=O)_2-NH-$, $-NH-(CH_2)_m-O-C(=O)-$, $-NH-(CH_2)_m-NH-C(=O)-$, $-NH-(CH_2)_m-O-C(=O)-NH-$, $-NH-(CH_2)_m-NH-C(=O)-O-$, $-NH-(CH_2)_m-NH-C(=O)-NH-$,
wherein m is an integer of 1 to 5, in particular 2 or 4.

$Y^{51}$ which is a divalent group is more preferably - O-, $-O-(CH_2)_m-O-C(=O)-NH-$, $-O-(CH_2)_m-NH-C(=O)-O-$, or $-O-(CH_2)_m-NH-C(=O)-$, $-O-(CH_2)_m-NH-S(=O)_2-$, or $-O-(CH_2)_m-S(=O)_2-NH-$, in particular $-O-(CH_2)_m-NH-C(=O)-$, wherein m is an integer of 1 to 5, in particular 2 or 4.

$Y^{51}$ is particularly preferably -O-.

$Y^{51}$ which is a trivalent group is preferably

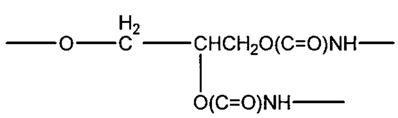

Specific examples of the (meth)acrylic monomer (IV) having a linear hydrocarbon group having 3 to 40 carbon atoms are as follows.

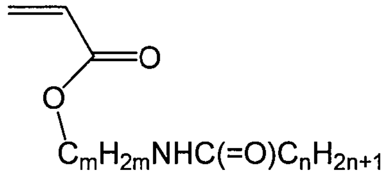

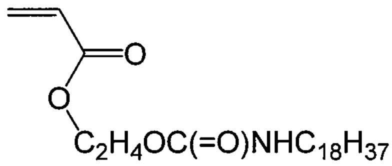

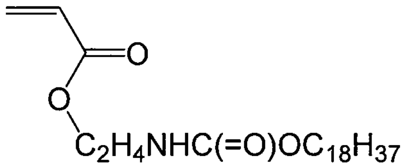

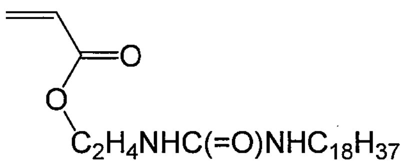

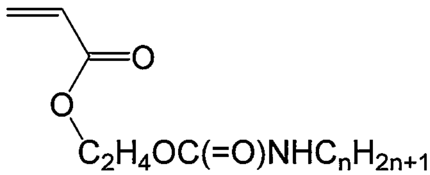

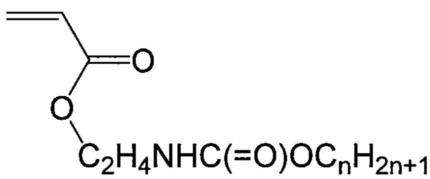

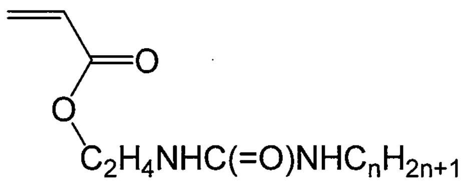

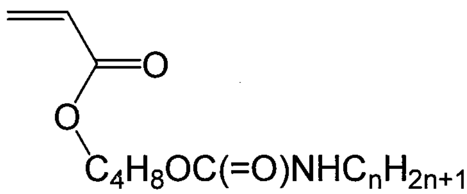

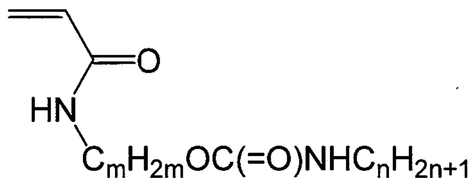

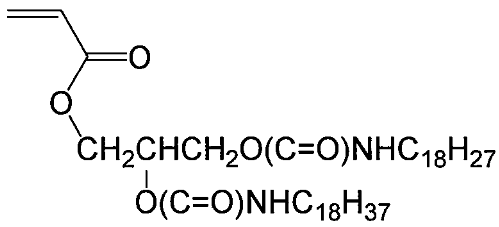

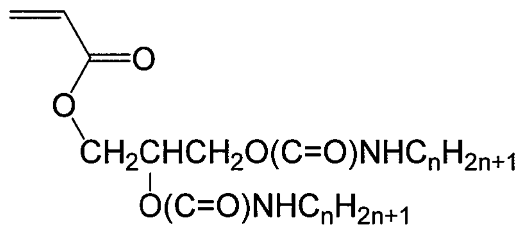

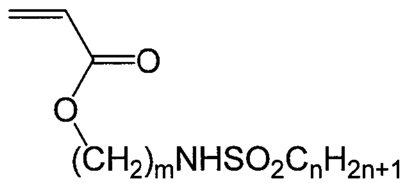

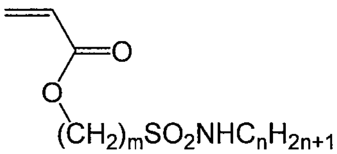

wherein n is a number of 3 to 40 and m is a number of 1 to 5.

Preferred specific examples of the (meth)acrylic monomer having a linear hydrocarbon group having 3 to 40 carbon atoms include n-lauryl (meth)acrylate, n-stearyl (meth)acrylate, n-behenyl (meth)acrylate, stearamidoethyl (meth)acrylate, n-lauryl (meth)acryl-amide, n-stearyl (meth)acrylamide, n-behenyl (meth)acrylamide, $CH_2=CHC(=O)OC_2H_4NHSO_2C_{18}H_{37}$, $CH_2=CHC(=O)OC_2H_4NHC(=O)C_{17}H_{35}$, $CH_2=CHC(=O)OC_2H_4NHC(=O)OC_{18}H_{37}$, $CH_2=CHC(=O)OC_2H_4OC(=O)NHC_{18}H_{37}$, and $CH_2=CHC(=O)OC_2H_4NHC(=O)NHC_{18}H_{37}$. The above structural formula shows acryl and acrylamide having hydrogen at the $\alpha$-position, but also includes methacryl and methacrylamide having methyl at the $\alpha$-position.

The (meth)acrylic monomer (IV) may be a (meth)acrylic monomer having a polydimethylsiloxane group.

The (meth)acrylic monomer (IV) may have a polydimethylsiloxane group in a side chain.

The (meth)acrylic monomer (IV) is preferably a monomer represented by the formula:

$$CH_2=C(-R^{62})-C(=O)-Y^{61}-R^{61}$$

wherein $R^{61}$ is a group having a polydimethylsiloxane group;

$R^{62}$ is a hydrogen atom, a monovalent organic group, or a halogen atom; and

$Y^{61}$ is a divalent to tetravalent group composed of at least one selected from a divalent to tetravalent hydrocarbon group having 1 carbon atom, $-C_6H_4-$, -O-, - C(=O)-, $-S(=O)_2-$, or -NR'-, wherein R' is H or a hydrocarbon group having 1 to 4 carbon atoms.

$R^{61}$ is a group having a polydimethylsiloxane group, and is preferably a group represented by the average formula:

$$-(SiR_2O)_aSiR_3$$

wherein a is 2 to 4000, for example 3 to 400; and
each R is independently a monovalent alkyl group having 1 to 12 carbon atoms, and at least two R are methyl groups.

$R^{62}$ is preferably a hydrogen atom, a methyl group, or a chlorine atom.

$Y^{61}$ is preferably a hydrocarbon group having 1 to 8 carbon atoms (for example, alkylene groups having 1 to 8 or 2 to 4 carbon atoms, particularly $-C_3H_6-$), $-O-(CH_2)_p-$, $-O-(CH_2)_p-NHC(=O)-(CH_2)_q-$, or $-NH-(CH_2)_q-$ (wherein p is a number of 1 to 5 and q is a number of 1 to 5).

Specific examples of the (meth)acrylic monomer (IV) having a polydimethylsiloxane group include:

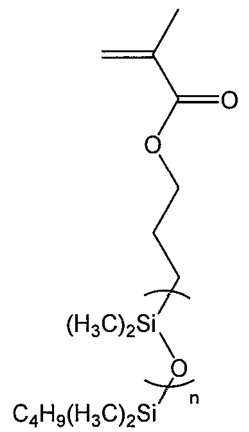

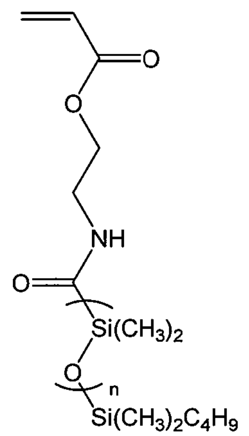

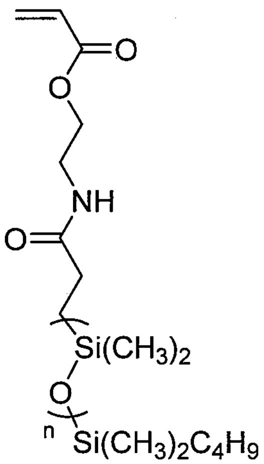

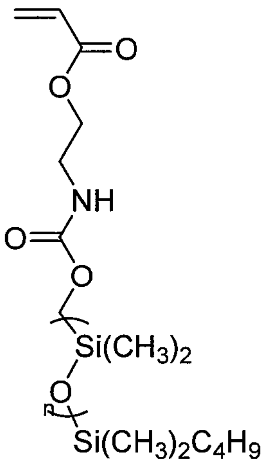

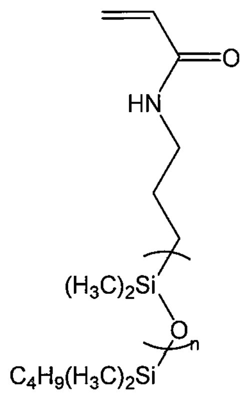

wherein n is a number of 1 to 500.

(V) Other monomers

Other monomers (V) other than the monomers (I) to (IV) may also be used.

Examples of the other monomers (V) include ethylene, vinyl acetate, acrylonitrile, vinyl chloride, polyethylene glycol (meth)acrylate, methoxypolyethylene glycol (meth)acrylate, methoxypolypropylene glycol (meth)acrylate, and vinyl alkyl ether. Other monomers are not limited to these examples. The other monomer (V) is preferably a fluorine-free monomer.

As used herein, "(meth)acrylate" means acrylate or methacrylate, and "(meth)acrylamide" means acrylamide or methacrylamide.

Each of the monomers (I) to (V) may be made of a single compound or a mixture of two or more kinds.

In the present disclosure, preferred combinations of monomers in the polymer are as follows.

Monomer (I) + Monomer (II)

Monomer (I) + Monomer (III)

Monomer (I) + Monomer (II) + Monomer (III)

Monomer (I) + Monomer (II) + Monomer (IV)

Monomer (I) + Monomer (III) + Monomer (IV)

Monomer (I) + Monomer (II) + Monomer (III) + Monomer (IV)

Particularly preferred combinations are as follows. Monomer (I) + Monomer (II)

Monomer (I) + Monomer (III)

Monomer (I) + Monomer (II) + Monomer (III)

Monomer (I) + Monomer (II) + Monomer (IV)

Monomer (I) + Monomer (II) + Monomer (III) + Monomer (IV)

Each of the monomers may be used alone or in combination of two or more. For example, a combination of two kinds of the monomers (I), one kind of the monomer (II) and one kind of the monomer (III) may be used.
In the polymer, the amount of the hydrophobic monomer (I) may be 40 to 100% by weight, 50 to 99% by weight, 55 to 98% by weight, or 58 to 97% by weight based on the polymer.
In the polymer, the molar ratio of the hydrophobic monomer (I)/the reactive/hydrophilic monomer and/or the short-chain hydrocarbon group-containing monomer (III) may be 50/50 to 100/0, 80/20 to 99.5/0.5, 85/15 to 98/2 or 90/10 to 99/1, or 40/60 to 90/10, 55/45 to 85/15, 58/42 to 80/20 or 60/40 to 78/22. Since the short-chain hydrocarbon group-containing monomer (III) is more hydrophobic than the reactive/hydrophilic monomer (III), the molar ratio of the hydrophobic monomer (I)/the short-chain hydrocarbon group-containing monomer (III) may be 100/0 to 0.05/99.95, 99/1 to 1/99, or 98/2 to 2/98.
The amount of the crosslinkable monomer (II) may be 0 to 30 mol, 0.5 to 25 mol, or 1 to 20 mol, or 0 to 15 mol, 0.2 to 10 mol, or 0.5 to 5 mol, based on 100 mol of the total of the hydrophobic monomer (I) and the reactive/hydrophilic monomer and/or the short-chain hydrocarbon group-containing monomer (II).
The amount of the (meth)acrylic monomer (IV) may be 0 to 60 mol, 0.5 to 40 mol, 1 to 30 mol, or 1 to 20 mol based on 100 mol of the total of the hydrophobic monomer (I) and the reactive/hydrophilic monomer and/or the short-chain hydrocarbon group-containing monomer (II).
The amount of the other monomer (V) may be 0 to 30 mol, 0.5 to 25 mol, 1 to 20 mol, or 1 to 10 mol based on a total of 100 mol.
Alternatively, based on 100 mol of the polymer,

the hydrophobic monomer (I) may be 40 to 99.5 mol, 50 to 99 mol, or 60 to 99 mol,
the crosslinkable monomer (II) may be 0 to 30 mol, 0.5 to 25 mol or 1 to 20 mol, or 0 to 10 mol, 0.2 to 6 mol or 0.5 to 4 mol,
the reactive/hydrophilic monomer and/or the short-chain hydrocarbon group-containing monomer (III) may be 0 to 50 mol, 0.5 to 40 mol or 1 to 20 mol, or 0 to 15 mol, 0.2 to 10 mol, or 0.5 to 5 mol, and
the (meth)acrylic monomer (IV) may be 0 to 50 mol, 1 to 40 mol or 1 to 30 mol, or 0 to 15 mol, 0.2 to 10 mol or 0.5 to 5 mol.

In the absence of the monomer (II), the high-Tg monomer (I-a) in the monomer (I) may be 1 to 80, 2 to 70, or 5 to 60 mol.
The water-repellent polymer may be a random polymer or a block copolymer, but is preferably a random polymer.
The amount of the organic fine particles (A) may be 50% by weight or less, for example, 0.01 to 40% by weight, particularly 0.05 to 30% by weight or 0.1 to 20% by weight, based on the anti-slip agent composition.

(B) Aqueous medium

The anti-slip agent composition (or water-repellent composition) contains an aqueous medium. The aqueous medium is water or a mixture of water and an organic solvent.
The water-repellent composition is generally an aqueous dispersion in which the polymer is dispersed in an aqueous medium (water or mixture of water and organic solvent).
The aqueous medium may be water alone or a mixture of water and a (water-miscible) organic solvent. The amount of the organic solvent may be 30% by weight or less, for example, 10% by weight or less based on the liquid medium. The aqueous medium is preferably water alone.
The amount of the aqueous medium may be 50 to 99.5 parts by weight, particularly 70 to 99.5 parts by weight, when the total amount of the water-repellent polymer and the aqueous medium is 100 parts by weight.

(C) Binder resin

The binder resin acts as a binder for binding the organic fine particles to the substrate. The binder resin is preferably a water-repellent resin. The water-repellent resin also acts as an active ingredient that exhibits water-repellency. Examples of the binder resin include an acrylic polymer, a urethane polymer, a polyolefin, a polyester, a polyether, a polyamide, a polyimide, a polystyrene, and a silicone polymer.
The water-repellent resin is a non-fluorine polymer having a hydrocarbon group having 3 to 40 carbon atoms in a side chain or a fluorine-containing polymer having a fluoroalkyl group having 1 to 20 carbon atoms in a side chain. The water-repellent resin is preferably a non-fluorine polymer.
In the non-fluorine polymer having a hydrocarbon group having 3 to 40 carbon atoms, the hydrocarbon group is preferably a branched hydrocarbon group or a long-chain (or long-chain linear) hydrocarbon group.
Examples of the water-repellent resins include urethane polymers, silicone polymers, acrylic polymers, and polystyrene.
An example of the non-fluorine polymer is an amidoamine dendrimer having a long-chain hydrocarbon group, which is described in US 8,703,894 B. The disclosure of this document is incorporated herein by reference.
An urethane polymer having a hydrocarbon group having 3 to 40 carbon atoms in the side chain can be produced, for example, by reacting an isocyanate group-containing compound (for example, a monoisocyanate or a polyisocyanate, specifically a diisocyanate or triisocyanate) with a hydroxyl group-containing compound having a hydrocarbon group having 3 to 40 carbon atoms.
A polyurethane having a branched structure such as a t-butyl group, an isopropyl group, and a 2,6,8-trimethylnonan-4-yl group in a side chain can be produced, for example, by reacting an isocyanate group-containing compound (for example, monoisocyanate or polyisocyanate, specifically diisocyanate or triisocyanate) with a hydroxyl group-containing compound having a branched structure such as a t-butyl group, an isopropyl group, and a 2,6,8-trimethylnonan-4-yl group.
Examples of the urethane polymer include urethane compounds having long-chain hydrocarbon groups comprising sorbitan tristearate, sorbitan monostearate, and polyfunctional isocyanurates, which is described in US 2014/0295724 A. The disclosure of this document is incorporated herein by reference. An example of the urethane polymer is polyurethane having a long-chain hydrocarbon group, which is described in JP 2019-519653 T (WO 2018/007549 A). The disclosure of this document is incorporated herein by reference.
A silicone polymer having a hydrocarbon group having 3 to 40 carbon atoms in a side chain can be produced, for example, by reacting a dichlorosilane compound containing dichlorosilane having a hydrocarbon group having 3 to 40 carbon atoms.
A polysilicone having a branched structure such as a t-butyl group, an isopropyl group, and a 2,6,8-trimethylnonan-4-yl group in a side chain can be produced, for example, by reacting a dichlorosilane compound containing dichlorosilane having a branched structure such as a t-butyl group, an isopropyl group, and a 2,6,8-trimethylnonan-4-yl group.
Examples of silicone polymers include long-chain alkyl-modified polydimethylsiloxane.
An acrylic polymer having a hydrocarbon group having 3 to 40 carbon atoms in a side chain can be produced by polymerizing a monomer containing an acrylic monomer having a hydrocarbon group having 3 to 40 carbon atoms in a side chain. Examples of the acrylic monomer are the same as those described in the above-mentioned hydrophobic monomer (1). Specific examples of the acrylic monomer include, for example:

stearyl (meth)acrylate, behenyl (meth)acrylate

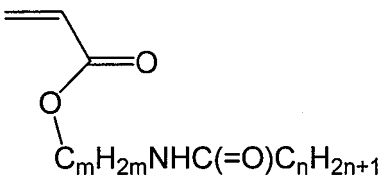

(in particular, stearic acid amidoethyl (meth)acrylate),
wherein n is a number of 7 to 40 and m is a number of 1 to 5.

An acrylic polymer having a branched structure such as a t-butyl group, an isopropyl group, and a 2,6,8-trimethylnonan-4-yl group in a side chain can be produced by polymerizing a monomer containing an acrylic monomer having a branched structure such as a t-butyl group, an isopropyl group, and a 2,6,8-trimethylnonan-4-yl group in a side chain. Examples of the acrylic monomer are the same as those described in the above-mentioned hydrophobic monomer (1). Specific examples of the acrylic monomer include t-butyl (meth)acrylate, isopropyl (meth)acrylate, and 2,6,8-trimethylnonan-4-yl acrylate.

Examples of the acrylic polymer include a polymer containing a repeating unit derived from an acrylic monomer having a long-chain hydrocarbon group such as behenyl (meth)acrylate or stearyl (meth)acrylate, and a repeating unit derived from vinylidene chloride and/or vinyl chloride.

Examples of the acrylic polymer include a polymer containing a repeating unit derived from an acrylic monomer having a long-chain hydrocarbon group such as behenyl (meth)acrylate or stearyl (meth)acrylate, a repeating unit derived from vinylidene chloride and/or vinyl chloride, and a repeating unit derived from styrene or $\alpha$-methylstyrene, and this acrylic polymer may be mixed with paraffin wax and used. An example thereof is described in JP 2012-522062 T (WO 2010/115496 A). The disclosure of this document is incorporated herein by reference.

Examples of the acrylic polymer include a polymer containing a repeating unit derived from an acrylic monomer having a long-chain hydrocarbon group such as stearyl (meth)acrylate, a repeating unit derived from vinylidene chloride and/or vinyl chloride, and a repeating unit derived from a reactive emulsifier such as polyoxyalkylene alkenyl ether, which is described in JP 2017/25440 A (WO 2017/014131 A). The disclosure of this document is incorporated herein by reference.

In the fluorine-containing polymer having a fluoroalkyl group having 1 to 20 carbon atoms in a side chain, the fluoroalkyl group is preferably a perfluoroalkyl group.

Examples of the fluorine-containing water-repellent resin include a fluorine-containing acrylic polymer containing a repeating unit formed from a (meth)acrylate having a perfluoroalkyl group having 4 to 8 carbon atoms in a side chain and a long-chain alkyl (meth)acrylate such as behenyl (meth)acrylate or stearyl (meth)acrylate.

Other monomers may be used for the urethane polymer, the silicone polymer, the acrylic polymer, and the polystyrene of the non-fluorine polymer and the fluorine-containing polymer.

Examples of the other monomers include ethylene, vinyl acetate, acrylonitrile, vinyl chloride, polyethylene glycol (meth)acrylate, polypropylene glycol (meth)acrylate, methoxypolyethylene glycol (meth)acrylate, methoxypolypropylene glycol (meth)acrylate, (meth)acrylates with polydimethylsiloxane in the side chain, and vinyl alkyl ether. Further monomers are not limited to these examples.

The weight ratio of the binder resin (C)/the organic fine particle (A) may be 1/99 to 99/1, 20/80 to 99/1 or 30/70 to 95/5, for example, 55/45 to 90/10. The amount of the binder resin (C) is preferably 30 to 99% by weight, preferably 50 to 98% by weight, more preferably 60 to 97% by weight, based on the total weight of the binder resin (C) and the organic fine particle (A).

(D) Surfactant

The water-repellent composition may contain or may not contain a surfactant (emulsifier). In general, in order to stabilize the particles during polymerization and stabilize the aqueous dispersion after polymerization, a surfactant may be added in a small amount (for example, 0.01 to 30 parts by weight based on 100 parts by weight of the monomer) during or after the polymerization.

Especially when the object to be treated is a textile product, it is preferable that the surfactant contains a nonionic surfactant in the water-repellent composition. Furthermore, it is preferable that the surfactant comprises one or more surfactants selected from a cationic surfactant, an anionic surfactant and an amphoteric surfactant. It is preferable to use a nonionic surfactant and a cationic surfactant in combination.

For each of the nonionic surfactant, the cationic surfactant and the amphoteric surfactant, one of them may be used, or two or more of them may be used in combination.

The amount of the surfactant may be 30 parts by weight or less (for example, 0 to 15 parts by weight or 0.01

to 15 parts by weight), and preferably 15 parts by weight or less (for example, 0.1 to 10 parts by weight), based on 100 parts by weight of the organic fine particle (A). In general, when a surfactant is added, the stability of the aqueous dispersion and the permeability into fabric are improved, but the water-repellency is lowered. It is preferable to select the type and amount of the surfactant so as to achieve both of these effects.

(E) Cross-linking agent

The cross-linking agent (E) is preferably one which crosslinks the aqueous dispersion of organic fine particles when heated after treating the fabric. Also, the cross-linking agent itself is preferably dispersed in water.

A preferred example of the cross-linking agent (E) is a blocked isocyanate compound. The blocked isocyanate compounds can be prepared by reacting

[$A(NCO)_m$, wherein A is a group remaining after the isocyanate group is removed from the polyisocyanate, and m is an integer of 2 to 8] isocyanate with [RH, wherein R may be a hydrocarbon group which may be substituted by a heteroatom such as a nitrogen atom or an oxygen atom, and H is a hydrogen atom] a blocking agent.

$A(NCO)_m$ is, for example, tolylene diisocyanate (TDI), diphenylmethane diisocyanate (MDI), hexamethylene diisocyanate (HDI), or the like.

Examples of the blocking agent which forms the R group include oximes, phenols, alcohols, mercaptans, amides, imides, imidazoles, ureas, amines, imines, pyrazoles and active methylene compounds.

The cross-linking agent (E) is preferably a blocked isocyanate such as oxime blocked toluene diisocyanate, blocked hexamethylene diisocyanate, or blocked diphenylmethane diisocyanate.

The amount of the cross-linking agent (E) may be 0 to 30 parts by weight or 0.01 to 20 parts by weight, for example 0.1 to 18 parts by weight, based on 100 parts by weight of the total of the organic fine particle (A) and the binder resin (C).

(F) Additives

The water-repellent composition may contain an additive (F) in addition to the organic fine particle (A) and the aqueous medium (B), and if necessary, the binder resin (C), the surfactant (D), and/or the cross-linking agent (E).

The water-repellent composition may also comprise other additives. Examples of other additives include other water repellent agent, an oil repellent agent, a drying rate adjuster, a film formation agent, a compatibilizer, an antifreezing agent, a viscosity adjuster, an ultraviolet absorber, an antioxidant, a pH adjuster, a antifoaming agent, a texture modifier, a slippage modifier, an antistatic agent, a hydrophilizing agent, an antibacterial agent, a preservative, an insect repellent, a fragrant agent and a flame retarder.

The amount of the additive may be 0 to 20 parts by weight or 0.05 to 20 parts by weight, for example 0.1 to 10 parts by weight, based on 100 parts by weight of the total of the organic fine particle (A) and the binder resin (C).

The polymers (polymer constituting the organic fine particles and polymer constituting the binder resin) can be produced by any ordinary polymerization method, and the conditions of the polymerization reaction can be arbitrarily selected. Examples of such a polymerization method include solution polymerization, suspension polymerization, and emulsion polymerization. Emulsion polymerization is preferred.

The organic fine particle is preferably produced by emulsion polymerization from the viewpoint of ease of synthesis and stability of fine particles.

The method for producing the polymers is not limited as long as a water-repellent composition in the form of an aqueous dispersion is obtained. For example, the polymer (organic fine particles) may be produced by polymerizing a monomer for organic fine particles in an aqueous medium in the presence or absence of a surfactant. Alternatively, an aqueous dispersion can be obtained by producing a polymer by solution polymerization, adding a surfactant and water, and removing the solvent.

When the water-repellent composition contains organic fine particles and a binder resin, the water-repellent composition containing organic fine particles and a binder resin can be produced by separately producing an aqueous dispersion of organic fine particles and an aqueous dispersion of a binder resin, and mixing the aqueous dispersion of organic fine particles and the aqueous dispersion of a binder resin. Alternatively, the water-repellent composition containing organic fine particles and a binder resin can be produced by polymerizing a monomer for the binder resin in an aqueous dispersion of the organic fine particles. Alternatively, the water-repellent composition containing organic fine particles and a binder resin can be produced by polymerizing a monomer for the organic fine particles in an aqueous dispersion of the binder resin.

In emulsion polymerization without using a surfactant, it is preferable to polymerize the monomer in an aqueous medium at a low concentration (for example, a monomer concentration of 1 to 30 % by weight, particularly 1 to 15 % by weight).

In the emulsion polymerization using a surfactant or a reactive emulsifier, it is preferable to add a small amount

(30 parts by mole or less, for example, 0.1 to 20 parts by mole based on 100 parts by mole of the total monomers) of a monomer which forms a homopolymer having a static contact angle of water of 90 degrees or more, among the monomers (I), or the monomer (IV). As a result, polymerization is performed at a high concentration, and the water-repellency of the polymer is increased.

Examples of the monomers to be added include t-butylstyrene, stearyl (meth)acrylate, behenyl (meth)acrylate, stearyl (meth)acrylamide, 2,6,8-trimethylnonan-4-yl acrylate, 2,4-di-t-butylstyrene, 2,4,6-trimethylstyrene, stearic acid amidoethyl (meth) acrylate, $CH_2=CHC(=O)OC_2H_4NHSO_2C_{18}H_{37}$, 4-t-butylphenyl (meth)acrylate, 2,3,4-methylphenyl (meth)acrylate, and

a (meth)acrylic monomer having a polydimethylsiloxane group and represented by

$$CH_2=C(-R^{62})-C(=O)-Y^{61}-R^{61}$$

wherein $R^{61}$ is a group having a polydimethylsiloxane group;
$R^{62}$ is a hydrogen atom, a monovalent organic group, or a halogen atom; and
$Y^{61}$ is a divalent to tetravalent group composed of at least one selected from a divalent to tetravalent hydrocarbon group having 1 carbon atom, $-C_6H_4-$, -O-, - C(=O)-, $-S(=O)_2-$, or -NR'-, wherein R' is H or a hydrocarbon group having 1 to 4 carbon atoms.

In the solution polymerization, a method is employed in which the monomer is dissolved in an organic solvent in the presence of a polymerization initiator, nitrogen substitution is performed, and then heating and stirring are performed in the range of 30 to 120°C for 1 to 10 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in the range of 0.01 to 20 parts by mole, for example, 0.01 to 10 parts by mole based on 100 parts by mole of the monomer.

The organic solvent is inert to the monomers and dissolves or homogeneously disperses them, and may be, for example, an ester (for example, an ester having 2 to 30 carbon atoms, specifically ethyl acetate, or butyl acetate), a ketone (for example, a ketone having 2 to 30 carbon atoms, specifically methyl ethyl ketone or diisobutyl ketone), or an alcohol (for example, an alcohol having 1 to 30 carbon atoms, specifically isopropyl alcohol, ethanol or methanol). Specific examples of organic solvents include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in an amount of 50 to 99.5 parts by weight, for example, 70 to 99 parts by weight based on 100 parts by weight of the total of the monomer and the organic solvent.

In the emulsion polymerization, a method is employed in which the monomer is emulsified in water in the presence of a polymerization initiator and a surfactant, nitrogen substitution is performed, and then stirring and polymerization are performed in the range of 30 to 80°C for 1 to 10 hours. Water-soluble polymerization initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, 2,2'-azobis(2-methylpropionamidine) dihydrochloride, 4,4'-azobis(4-cyanovaleric acid), 2,2'-azobis[2-methyl-N-(2-hydroxyethyl)propionamide], 2,2'-azobis[2-(2-imidazolin-2-yl)propane] dihydrochloride, 2,2'-azobis[2-(2-imidazolin-2-yl)propane], sodium peroxide, potassium persulfate, and ammonium persulfate, and oil-soluble polymerization initiators such as azobisisobutyronitrile, benzoyl peroxide, di-t-butyl peroxide, lauryl peroxide, cumene hydroperoxide, t-butyl peroxypivalate and diisopropyl peroxydicarbonate may be used as a polymerization initiator. The polymerization initiator is used in the range of 0.01 to 10 parts by mole based on 100 parts by mole of the monomer. If necessary, a reducing agent such as rongalite, ascorbic acid, tartaric acid, sodium disulfite, isoascorbic acid and ferrous sulfate may also be used in combination.

As the emulsifier, various anionic, cationic or nonionic emulsifier can be used, and the emulsifier is used in the range of 0.5 to 30 parts by weight based on 100 parts by weight of the monomer. Anionic and/or nonionic and/or cationic emulsifier are preferably used. When the monomers are not completely compatible with each other, it is also preferable to add a compatibilizer, for example, a water-soluble organic solvent, which is sufficiently compatible with these monomers. By adding the compatibilizer, it is possible to improve the emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, isopropanol, ethanol, and methanol, and the water-soluble organic solvent may be used in the range of 0.1 to 50 parts by weight, for example 1 to 40 parts by weight, based on 100 parts by weight of water.

A chain transfer agent may be used in the polymerization. The molecular weight of the polymer can be changed according to the amount of the chain transfer agent used. Examples of chain transfer agents are mercaptan group-containing compounds such as lauryl mercaptan, thioglycol, and thioglycerol (particularly alkyl mercaptan (having 1 to 30 carbon atoms, for example)), and inorganic salts such as sodium hypophosphite and sodium bisulfite. The amount of the chain transfer agent used may be in the range of 0.01 to 10 parts by weight, for example, 0.1 to 5 parts by weight, based on 100 parts by weight of the total amount of the monomers.

The water-repellent composition is generally preferably an aqueous dispersion. The water-repellent composition contains a polymer (active ingredient of the water-repellent composition) and an aqueous medium. The amount of the aqueous medium may be, for example, 50 to 99.9% by weight, particularly 70 to 99.5% by weight, based on the water-repellent composition.

In the water-repellent composition, the concentration of the polymer may be 0.1 to 50% by weight, for example 0.5 to 40% by weight.

The water-repellent composition (and the aqueous dispersion of organic fine particles) can be used as an external treatment agent (surface-treatment agent) or an internal treatment agent. The water-repellent composition (and the aqueous dispersion of organic fine particles) can be used as an oil-repellent, a soil resistant agent, a soil release agent, a release agent, or a mold release agent.

When the water-repellent composition is an external treatment agent, it can be applied to an object to be treated by a conventionally known method. Usually, the water-repellent composition is diluted by dispersing it in an organic solvent or water, and is adhered to the surface of the object to be treated by a known method such as immersion coating, spray coating, or foam coating, and then dried. If necessary, the water-repellent composition may be applied together with a suitable cross-linking agent (for example, blocked isocyanate) for curing. Further, it is also possible to add an insect repellent, a softening agent, an antibacterial agent, a flame retarder, an antistatic agent, a coating material fixing agent, a wrinkle-resistant agent to the water-repellent composition and use in combination. The concentration of the polymer in the treatment liquid to be brought into contact with the substrate may be 0.01 to 10% by weight (particularly in the case of dip coating), for example, 0.05 to 10% by weight.

The object to be treated with the water-repellent composition (and the aqueous dispersion of organic fine particles) is preferably a material required to have slip resistance. Examples of the object to be treated include textile products. Various examples can be given as textile products. Examples of the textile products include various products such as animal and plant natural fibers such as cotton, hemp, wool and silk fibers, synthetic fibers such as polyamide, polyester, polyvinyl alcohol, polyacrylonitrile, polyvinyl chloride and polypropylene fibers, semisynthetic fibers such as rayon and acetate fibers, inorganic fibers such as glass fibers, carbon fibers and asbestos fibers, and mixtures of any of these fibers.

The textile product may be in any form such as fiber or fabric.

The water-repellent composition can also be used as a soil resistant agent, a release agent, and a mold release agent (for example, an internal mold release agent or an external mold release agent). For example, a surface of a substrate can be easily peeled from another surface (another surface on the substrate or a surface on another substrate).

The organic fine particles can be applied to fibrous substrates (for example, textile products) by any of the methods known for treating textile products with liquids. When the textile product is a fabric, the fabric may be immersed in a solution, or a solution may be adhered or sprayed to the fabric. The treated textile product is dried, preferably heated at, for example, 100°C to 200°C, for developing water-repellency.

Alternatively, the organic fine particles may be applied to a textile product through a cleaning method, and may be, for example, applied to a textile product in washing application or a dry cleaning method.

The textile product to be treated is typically a fabric, and examples of the fabric include woven fabrics, knitted fabrics, nonwoven fabrics, clothing fabrics and carpets, or the textile product may also be a fiber, a yarn or an intermediate textile product (for example, a sliver or a rove). The textile product material may be a natural fiber (for example, cotton or wool fiber), a chemical fiber (for example, viscose rayon or lyocell), a synthetic fiber (for example, polyester, polyamide or acrylic fiber), or a mixture of fibers (for example, mixture of natural fibers and synthetic fibers).

The organic fine particles can be used in applications where slip resistance is required. Preferred applications are fabrics for clothing, fabrics for outdoor and sporting goods.

The "treatment" means that by immersion, spraying, coating or the like, the treatment agent is applied to the object to be treated. The treatment causes the organic fine particles as an active ingredient of the treatment agent to adhere to the object to be treated. The treatment causes the organic fine particles to penetrate the inside of the object to be treated and/or to adhere to a surface of the object to be treated.

While certain embodiments have been described, it will be understood that various changes in form and details may be made therein without departing from the spirit and scope of the claims.

## Examples

Hereinafter, the present disclosure will be described in detail with reference to Examples, but the present disclosure is not limited to these Examples.

In the following, parts or % or ratios represent parts by weight or % by weight or weight ratios unless otherwise specified.

The test procedure is as follows.

[Falling speed test]

In the falling speed test, the average falling speed at a distance of about 40 mm was measured by immersing a PET fabric (weight: 88 g/$m^2$, 70 denier, gray) in an aqueous dispersion of organic fine particles or a composition containing organic fine particles and a binder resin, passing the PET fabric through a mangle and then a pin tenter at 170°C for 1 minute to prepare a PET fabric to which the organic fine particles are adhered, dropping 20 μL of water from a microsyringe onto the PET fabric having an inclination of 30° using a fully automatic contact angle meter (DropMaster 701, manufactured by Kyowa Interface Science Co., Ltd.), and measuring the falling of the dropped water using a highspeed camera (VW-9000 manufactured by Keyence Co., Ltd.), and was taken as the falling speed.

[Measurement of contact angle measurement]

The static contact angle of water of a fabric (PET fabric) treated with an aqueous dispersion of organic fine particles or a composition containing organic fine particles and a binder resin was measured by immersing a PET fabric (weight: 88 g/$m^2$, 70 denier, gray) in an aqueous dispersion of organic fine particles or a composition containing organic fine particles and a binder resin, passing the PET fabric through a mangle and then a pin tenter at 170°C for 1 minute to prepare a PET fabric to which the organic fine particles are adhered, dropping 2 μL of water onto the PET fabric, and measuring the static contact angle 1 second after the dropping using a fully automatic contact angle meter (DropMaster 701, manufactured by Kyowa Interface Science Co., Ltd.). The contact angle of the organic fine particles on the fabric (PET fabric) is preferably 120° or more, more preferably 130° or more, and still more preferably 140° or more.

The contact angle of the aqueous dispersion of the binder resin was measured by dropcasting the aqueous dispersion of the binder resin onto a glass substrate (made of slide glass soda lime glass), heating at 150°C for 3 minutes to produce a coating film, dropping 2 μL of water onto the coating film, and measuring the static contact angle 1 second after the dropping by using a fully automatic contact angle meter (DropMaster 701, manufactured by Kyowa Interface Science Co., Ltd.).

[Measurement of solid content]

The obtained aqueous dispersion of organic fine particles was put into an aluminum cup by 1 g and dried at 150°C for 1 hour. The solid content was calculated from the weight before and after drying.

Solid content% = (weight before drying - weight after drying) / weight before drying × 100

[Water-repellency test]

An aqueous dispersion of organic fine particles was prepared to a predetermined concentration, the fabric was dipped in this test solution, passed through a mangle, and the water-repellency was evaluated with the heat-treated test fabric. The water-repellency of the treated fabric was evaluated according to the spray method of JIS-L-1092 (AATCC-22). As shown in the table described below, the water-repellency is represented by a water-repellency number. The higher the score, the better the water-repellency. A "+" attached to a number means better than the number, and a "-" attached to a number means worse than the number. Evaluation was performed using a polyester fabric (PET) (weight: 88 g/$m^2$, 70 denier, gray).

The water-repellency test is preferably 80 points or more or 90 points or more.

| Water-repellency no. | State |
|---|---|
| 100 | The surface is not wet, and has no water droplets. |
| 90 | The surface is not wet, and has small water droplets. |
| 80 | The surface has small individual wet parts like water droplets. |
| 70 | Half the surface is wet, and small individual wet parts permeate the fabric. |
| 50 | The entire surface is wet. |

(continued)

| Water-repellency no. | State |
|---|---|
| 0 | The entire surface and back surface are wet. |

[Strong water-repellency test]

In the test conducted in accordance with the spray method specified in JIS-L-1092 (AATCC-22), ease of repelling water contacting the fabric and the speed of the water flowing down from the fabric were visually evaluated. The higher the score, the better the strong water-repellency.

| Strong water-repellency test No. | State |
|---|---|
| 5 | Water contacting the fabric is repelled so as to move a long way away from the fabric, few droplets are generated on the fabric, and the water droplets immediately flow down. |
| 4 | Water contacting the fabric is repelled so as to move away from the fabric, and the speed of the water flowing down from the fabric is lower than that in the state "5". |
| 3 | Water contacting the fabric is repelled so as to slightly float from the fabric, and water droplets are generated on the fabric, and roll down without remaining on the fabric. |
| 2 | Water contacting the fabric does not substantially move away from the fabric, and while water droplets generated on the fabric roll down, a larger amount of water droplets remain on the fabric as compared to the state "3". |
| 1 | Water contacting the fabric rolls along the fabric, and a large amount of water droplets remain on the fabric. |

[Slippage resistance (slip resistance) test]

A slippage resistance test (slip resistance test) was conducted in accordance with JIS-L-1096 B method. A polyester fabric (white) treated with a water-repellent agent was cut into five test pieces of 10 cm × 17 cm in each of a longitudinal direction and a lateral direction, the test piece was folded in half with the front face inside, and cut along the folding line, and the cut pieces were stitched together at 1 cm apart from the cut end with a normal sewing-machine needle #11, and a lockstitch seam system was employed, the number of seams per cm was set to 5, and a yarn of polyester filaments 78 dex × 3 was used. A grab method was carried out using a tensile tester, and in the grab method, the test piece was clamped at a clamp distance of 7.62 cm, and a predetermined load (49.0 N (5 kgf)) was applied at a tension strength of 30 cm per minute, and thereafter, the test piece was removed from the clamp, and the maximum pore size (mm) in slippage of a load at which slacks in the vicinity of seams were eliminated after standing for 1 hour was measured.

It is most preferable that the value of the slippage resistance test is equivalent to that of an untreated fabric, that is, 2.0 mm or less, but the slip resistance is improved by 0.5 mm or more in the value of the slippage resistance test as compared with the case where only the water-repellent agent without fluorine is used, still more preferably 8.0 mm or less, 7.0 mm or less, and 6.0 mm or less, for example, 5.0 mm or less. When the value (mm) of the slippage resistance test in the case where only the water-repellent agent without fluorine is used is set to 100%, the value of the slippage resistance test may be decreased to 95% or less, and is preferably 90% or less, 80% or less, or 70% or less.

[Measurement of particle size of dispersion]

For dynamic light scattering (DLS) measurement, nanoSAQLA manufactured by Otsuka Electronics Co., Ltd. was used to determine the average diameter of particles in the dispersion. The aqueous dispersion of organic fine particles was diluted with pure water to a solid content concentration of 0.1% and measured at 25°C. The particle size distribution was analyzed based on the scattering intensity.

[Water-repellency and strong water-repellency washing durability (water-repellency (after washing) and strong water-repellency (after washing))]

In accordance with JIS L-0217 103 method, a test fabric is washed 20 times, and the water-repellency and strong water-repellency are evaluated. After washing, it is preferable that the water-repellency is 80 points or more and

the strong water-repellency is 2 points or more.

In Examples and Comparative Examples, the meanings of the abbreviations are as follows.

tBuMA: t-butyl methacrylate
iBMA: isobornyl methacrylate
CHMA: cyclohexyl methacrylate
DVB: divinylbenzene
GMA: glycidyl methacrylate
MMA: methyl methacrylate
DAAM: diacetone acrylamide
tBuAAm: t-butylacrylamide
DM: 2-dimethylaminoethyl methacrylate
EGDMA: ethylene glycol dimethacrylate
NPDMA: neopentyl glycol dimethacrylate
GDMA: glycerine dimethacrylate
DCMA: dicyclopentyl dimethacrylate
Emulsifier 1: polyethylene glycol monooleyl ether (liquid)
Emulsifier 2: stearyltrimonium chloride
Emulsifier 3: cetrimonium chloride
Emulsifier 4: poxyalkylene alkenyl ether (HLB13)
Cross-linking agent 1: oxime-blocked toluene diisocyanate
Cross-linking agent 2: blocked diphenylmethane diisocyanate

<Synthesis Example B1>

In a 500 ml container, 30 g of tripropylene glycol, 45 g of ($CH_2$=CHC(=O)$OC_2H_4$NHC(=O)$C_{17}H_{35}$) C17AEA, 34 g of StA, 1 g of N-alkylolacrylamide, 2 g of trialkylammonium chloride, 2 g of sorbitan monoalkylate, 2.5 g of polyoxyethylene trialkyl ether, 3.5 g of polyoxyethylene alkyl ether, and 180 g of pure water were added, and stirred at 80°C with a homomixer at 2000 rpm for 1 minute, and dispersed by ultrasonic waves for 15 minutes. The emulsified dispersion was transferred to an autoclave, 0.2 g of alkyl mercaptan and 20 g of vinyl chloride were added after nitrogen substitution, and 1 g of an azo initiator was added and heated and stirred at 60°C for 20 hours to obtain a polymer aqueous dispersion (binder B1). The contact angle of water in the film obtained by applying the emulsified dispersion to the glass substrate was 109°.

<Synthesis Example B2>

In a nitrogen-substituted reaction vessel, 28.9 g of sorbitan tristearate, 0.31 g of sorbitan monostearate, 7.5 g of hexamethylene triisocyanate (biuret), 37.5 g of methyl isobutyl ketone, and 0.03 g of dibutyl tin laurate were added, and heated and stirred at 80°C. In this solution, 9 g of tripropylene glycol, 1.8 g of sorbitan tristearate, 0.75 g of polyethylene glycol monooleyl ether, 0.6 g of trimethyl octadecyl ammonium chloride, and 40 g of pure water were added and stirred. Methyl isobutyl ketone was removed by an evaporator to obtain an aqueous dispersion of a reaction product of sorbitan stearate and isocyanate (binder B2). Further, an aqueous dispersion of long-chain alkyl-modified polydimethylsiloxane wax was added to obtain an aqueous dispersion of the mixture. The contact angle of water in the film obtained by applying the dispersion to the glass substrate was 105°.

<Synthesis Example B3>

In a 200 ml poly container, 10 g of tripropylene glycol, 20 g of StA, 0.05 g of trialkylammonium chloride, 2.0 g of sorbitan monoalkylate, 1.0 g of polyoxyethylene alkyl ether, and 60 g of pure water were added, and stirred with a homomixer at 2000 rpm for 1 minute, and dispersed by ultrasonic waves for 15 minutes. The emulsified dispersion was transferred to an autoclave, 0.05 g of alkyl mercaptan and 8.6 g of vinyl chloride were added after nitrogen substitution, and 0.5 g of an azo initiator was added and heated and stirred at 60°C for 4 hours to obtain a polymer aqueous dispersion (binder B3). The contact angle of water in the film obtained by applying the emulsified dispersion to the glass substrate was 108°.

<Synthesis Example 1>

In a nitrogen-substituted reaction vessel, 0.66 g of t-butylstyrene (tBuSty), 0.39 g of glycidyl methacrylate

(GMA), 0.018 g of divinylbenzene (DVB), and 33 ml of pure water were added and dispersed. After nitrogen substitution, 18.6 mg of 2,2'-azobis(2-methylpropionamidine) dihydrochloride was added, and the mixture was heated and stirred at 65°C for 8 hours to obtain an aqueous dispersion of organic fine particles. The solid content was 2.23%. The static contact angle of water of PET (fabric) (weight: 88 g/$m^2$, 70 denier, gray) treated with an aqueous dispersion of organic fine particles was 143.1°, and the falling speed was 265 mm/s.

<Synthesis Example 2>

In a nitrogen-substituted reaction vessel, 0.50 g of t-butyl methacrylate (tBuMA), 0.20 g of glycidyl methacrylate (GMA), 0.47 g of isobornyl methacrylate (iBMA), 0.091 g of divinylbenzene (DVB), and 39 ml of pure water were added and dispersed. After nitrogen substitution, 19.0 mg of 2,2'-azobis(2-methylpropionamidine) dihydrochloride was added, and the mixture was heated and stirred at 65°C for 8 hours to obtain an aqueous dispersion of organic fine particles. Solids content was 2.32%. The static contact angle of water of PET (fabric) (weight: 88 g/$m^2$, 70 denier, gray) treated with an aqueous dispersion of organic fine particles was 156.2°, and the falling speed was 227 mm/s.

<Synthesis Example 3>

In a nitrogen-substituted reaction vessel, 0.39 g of t-butyl methacrylate (tBuMA), 0.16 g of glycidyl methacrylate (GMA), 0.37 g of isobornyl methacrylate (iBMA), 0.072 g of divinylbenzene (DVB), 43 mg of polyethylene glycol monooleyl ether (liquid), 1.5% by weight of stearyltrimonium chloride based on the total monomers, and 19 ml of pure water were added and dispersed. After nitrogen substitution, 15.1 mg of 2,2'-azobis(2-methylpropionamidine) dihydrochloride was added, and the mixture was heated and stirred at 65°C for 8 hours to obtain an aqueous dispersion of organic fine particles. Solids content was 4.71%. The particle size (average particle size) of the aqueous dispersion was 71.1 nm. An aqueous dispersion of the organic fine particles and Synthesis Example B2 was prepared so that the solids content of the organic fine particles was 0.2% and the solids content of Synthesis Example B1 was 0.8%. The cross-linking agent 1 was added to the aqueous dispersion in an amount of 17% solids content based on the solids content of Synthesis Example B2. The PET (fabric) (weight: 88 g/$m^2$, 70 denier, gray) treated with this aqueous dispersion had a falling speed of 117 mm/s, a water-repellency test score of 95 points, and a strong water-repellency test score of 3 points.

<Synthesis Example 4>

In a reaction vessel, 9.61 g of t-butylstyrene (tBuSty), 11.37 g of glycidyl methacrylate (GMA), 0.52 g of divinylbenzene (DVB), 0.24 g of emulsifier 2, and 570 ml of pure water were added and dispersed. After nitrogen substitution, 54.2 mg of 2,2'-azobis(2-methylpropionamidine) dihydrochloride was added, and the mixture was heated and stirred at 65°C. After 30 minutes, 9.61 g of t-butylstyrene (tBuSty), 11.37 g of glycidyl methacrylate (GMA), and 0.52 g of divinylbenzene (DVB) were added, and the mixture was heated and stirred at 65°C for 8 hours to obtain an aqueous dispersion of organic fine particles. Solids content was 5.4%. The particle size (average particle size) of the aqueous dispersion was 76 nm.

<Synthesis Example 5>

In a reaction vessel, 1.00 g of t-butylstyrene (tBuSty), 0.049 g of divinylbenzene (DVB), 52 mg of emulsifier 1, and 19 ml of pure water were added and dispersed. After nitrogen substitution, 16.9 mg of 2,2'-azobis(2-methylpropionamidine) dihydrochloride was added, and the mixture was heated and stirred at 65°C for 8 hours to obtain an aqueous dispersion of organic fine particles. Solids content was 4.54%. The particle size (average particle size) of the aqueous dispersion was 234 nm.

<Synthesis Examples 6 to 14>

The same procedure as in Synthesis Example 3 was repeated except that the monomers shown in Table 1 were used. The results are shown in Table 1. The monomer molar ratios in Table 1 indicate molar equivalents based on 1 mol of 2,2'-azobis(2-methylpropionamidine) dihydrochloride.

[Table 1]

| | Monomer | | | | Monomer molar ratio * | | | |
|---|---|---|---|---|---|---|---|---|
| | ① | ② | ③ | ④ | ① | ② | ③ | ④ |
| Synthesis Example 6 | tBu MA | CHM A | MMA | DVB | 30 | 50 | 5 | 10 |
| Synthesis Example 7 | - | CHM A | DAAM | DVB | - | 80 | 5 | 10 |
| Synthesis Example 8 | tBu MA | iBM A | MMA | NPD MA | 50 | 30 | 5 | 2 |
| Synthesis Example 9 | CHM A | iBM A | DAAM | GDM A | 60 | 20 | 2 | 8 |
| Synthesis Example 10 | tBu MA | CHM A | MMA | - | 30 | 50 | 5 | - |
| Synthesis Example 11 | CHM A | iBM A | DM | EGD MA | 30 | 50 | 2 | 2 |
| Synthesis Example 12 | CHM A | iBM A | tBuA Am | EGD MA | 30 | 50 | 5 | 2 |
| Synthesis Example 13 | tBu MA | iBM A | MMA | DCM A | 50 | 30 | 5 | 2 |
| Synthesis Example 14 | CHM A | iBM A | MMA | - | 50 | 30 | 5 | - |

<Synthesis Examples 15-17>

The same procedure as in Synthesis Example 3 was repeated except that the monomers shown in Table 2 were used. The results are shown in Table 2. The monomer molar ratios in Table 2 indicate molar equivalents based on 1 mol of 2,2'-azobis(2-methylpropionamidine) dihydrochloride.

[Table 2]

| | Monomer | | | | Monomer molar ratio * | | | |
|---|---|---|---|---|---|---|---|---|
| | ① | ② | ③ | ④ | ① | ② | ③ | ④ |
| Synthesis Example 15 | tBuMA | iBMA | GMA | DVB | 45 | 28 | 18 | 9 |
| Synthesis Example 16 | - | CHMA | MMA | - | - | 3 | 97 | - |
| Synthesis Example 17 | - | CHMA | MMA | EGDMA | - | 3 | 96 | 1 |

<Examples 1 to 35>

Aqueous dispersions were prepared by adjusting the organic fine particles synthesized in Synthesis Examples 1 to 14 and the binders synthesized in Synthesis Examples B1 to B2 so as to have the proportions of the solid contents shown in Table 3. The cross-linking agent 1 was added to the aqueous dispersion in an amount of 17% solids content based on the solids content of the binder. In Examples 27 to 35, the same amount of the cross-linking agent 2 was used instead of the cross-linking 1. The value of the slippage resistance test of PET (fabric) (white) treated with the prepared aqueous dispersion and the water-repellency and strong water-repellency test results of PET (fabric) (weight: 88 $g/m^2$, 70 denier, gray) treated with the same aqueous dispersions are shown in Table 3.

<Comparative Examples 1 and 2>

Aqueous dispersions of particles containing inorganic silica as a main component (NICOSALT) and the binder synthesized in Synthesis Example B1 were adjusted so as to have predetermined proportions of the solid contents shown in Table 3. The cross-linking agent 1 was added to the aqueous dispersion in an amount of 17% solids content based on the solids content of the binder. The value of the slippage resistance test of PET (fabric) (white) treated with the prepared aqueous dispersion and the water-repellency and strong water-repellency test results of PET (fabric) (weight: 88 $g/m^2$, 70 denier, gray) treated with the same aqueous dispersions are shown in Table 3.

<Comparative Examples 3 and 4>

Aqueous dispersions were adjusted so that the solid content of the binders synthesized in Synthesis Examples B1 and B2 was the predetermined amount shown in Table 3. The cross-linking agent 1 was added to the aqueous dispersion in an amount of 17% solids content based on the solids content of the binder. The value of the slippage

resistance test of PET (fabric) (white) treated with the prepared aqueous dispersion and the water-repellency and strong water-repellency test results, and the water-repellency and strong water-repellency washing durability test results of PET (fabric) (weight: 88 g/$m^2$, 70 denier, gray) treated with the same aqueous dispersions are shown in Table 3.

[Table 3]

| | Particles | Binder | Aqueous dispersion composition | | Water-repellency | Strong water-repellency | Water-repellency (after washing) | Strong water-repellency (after washing) | Slippage resistance test [mm] |
|---|---|---|---|---|---|---|---|---|---|
| | | | Particle solid content % | B1 solid content % | | | | | |
| Ex.1 | Syn. Ex. 1 | B1 | 0.1 | 0.9 | 95- | 2.5 | 90+ | - | 8.0 |
| Ex. 2 | Syn.Ex.1 | B1 | 0.4 | 0.9 | 95- | 2.5 | 85 | - | 6.0 |
| Ex. 3 | Syn.Ex.1 | B1 | 0.9 | 0.9 | 90+ | 2 | 80- | - | 4.0 |
| Ex. 4 | Syn.Ex.1 | B1 | 2 | 0.9 | 95 | 2.5 | 80- | - | 2.0 |
| Ex. 5 | Syn.Ex.2 | B1 | 0.4 | 0.9 | 95 | - | - | - | 6.5 |
| Ex. 6 | Syn.Ex.2 | B1 | 0.9 | 0.9 | 95 | - | - | - | 3.5 |
| Ex. 7 | Syn.Ex.2 | B1 | 1.5 | 0.9 | 90+ | - | - | - | 3.3 |
| Ex. 8 | Syn.Ex.4 | B1 | 0.4 | 0.9 | 90+ | 2.5 | - | - | 4.5 |
| Ex. 9 | Syn.Ex.4 | B1 | 0.9 | 0.9 | 90 | 2 | - | - | 3.5 |
| Ex. 10 | Syn.Ex.4 | B1 | 1.5 | 0.9 | 90+ | 2 | - | - | 3.0 |
| Ex. 11 | Syn.Ex.4 | B1 | 2 | 0.9 | 90- | 2 | - | - | 2.0 |
| Ex. 12 | Syn.Ex.5 | B1 | 0.4 | 0.9 | 85+ | - | - | - | 7.0 |
| Ex. 13 | Syn.Ex.5 | B1 | 0.9 | 0.9 | 90 | - | - | - | 6.0 |
| Ex. 14 | Syn.Ex.5 | B1 | 1.5 | 0.9 | 85+ | - | - | - | 4.5 |
| Ex. 15 | Syn.Ex.5 | B1 | 2 | 0.9 | 85 | - | - | - | 4.5 |
| Ex. 16 | Syn. Ex. 1 | B1 | 0.3 | 0.7 | 90+ | 2.5 | - | - | 7.0 |
| Ex.17 | Syn.Ex.1 | B1 | 0.5 | 0.5 | 90 | 2 | - | - | 5.0 |
| Ex. 18 | Syn.Ex.1 | B1 | 0.7 | 0.3 | 90 | 2 | - | - | 3.5 |
| Ex. 19 | Syn.Ex.4 | B1 | 0.3 | 0.7 | 95- | - | - | - | 6.5 |
| Ex. 20 | Syn.Ex.5 | B1 | 0.3 | 0.7 | 90 | - | - | - | 7.5 |
| Ex.21 | Syn.Ex.2 | B1 | 0.3 | 0.7 | 90 | - | - | - | 6.5 |
| Ex. 22 | Syn.Ex.1 | B1 | 2 | 1 | 90 | 2 | - | - | 3.3 |
| Ex. 23 | Syn.Ex.4 | B1 | 1 | 1.5 | 90+ | 2 | - | - | 2.5 |

(continued)

| | Particles | Binder | Aqueous dispersion composition | | Water-repellency | Strong water-repellency | Water-repellency (after washing) | Strong water-repellency (after washing) | Slippage resistance test [mm] |
|---|---|---|---|---|---|---|---|---|---|
| | | | Particle solid content % | B1 solid content % | | | | | |
| Ex.24 | Syn.Ex.5 | B1 | 1 | 2 | 90 | - | - | - | 4.5 |
| Ex.25 | Syn.Ex.2 | B1 | 2 | 1 | 95- | 2.5 | - | - | 3.5 |
| Ex.26 | Syn.Ex.3 | B1 | 0.4 | 1.8 | 100 | - | - | - | 6.0 |
| Ex.27 | Syn.Ex.6 | B1 | 0.2 | 0.9 | 95 | 2.5 | 90 | 2 | 7.0 |
| Ex.28 | Syn.Ex.7 | B1 | 0.2 | 0.9 | 95 | 2.5 | 90 | 2 | 8.0 |
| Ex.29 | Syn. Ex. 8 | B1 | 0.2 | 0.9 | 95 | 2.5 | 90 | 2 | 7.5 |
| Ex. 30 | Syn.Ex.9 | B1 | 0.2 | 0.9 | 95 | 2.5 | 90 | 2 | 6.0 |
| Ex. 31 | Syn. Ex. 10 | B1 | 0.2 | 0.9 | 95 | 2.5 | 90 | 2 | 8.0 |
| Ex. 32 | Syn. Ex. 11 | B1 | 0.2 | 0.9 | 95 | 2.5 | 90 | 2 | 7.0 |
| Ex. 33 | Syn. Ex. 12 | B1 | 0.2 | 0.9 | 95 | 2.5 | 90 | 2 | 7.0 |
| Ex. 34 | Syn. Ex. 13 | B1 | 0.2 | 0.9 | 95 | 2.5 | 90 | 2 | 7.0 |
| Ex. 35 | Syn. Ex. 14 | B1 | 0.2 | 0.9 | 95 | 2.5 | 90 | 2 | 9.0 |
| Com. Ex. 1 | NICOSALT S12 | B1 | 0.6 | 0.9 | 80 seeping through | 1 | 80 seeping through | 1 | 2.5 |
| Com.Ex. 2 | NICOSALT S12 | B1 | 0.4 | 0.9 | 90 | 2 | 85 seeping through | - | 5.0 |
| Com.Ex. 3 | - | B1 | - | 0.9 | 95- | 2.5 | 85 seeping through | - | 10.5 |
| Com.Ex. 4 | - | B2 | - | 0.9 | 95- | 2 | 85 seeping through | - | 9.5 |

<Examples 36 to 56>

Aqueous dispersions were prepared by adjusting the organic fine particles synthesized in Synthesis Examples 15 to 17 and the binders synthesized in Synthesis Examples B1 to B3 so as to have the proportions of the solid contents shown in Table 4. The cross-linking agent 2 was added to the aqueous dispersion in an amount of 17% solids content based on the solids content of the binder. The value of the slippage resistance test of PET (fabric) (white) treated with the prepared aqueous dispersion and the water-repellency and strong water-repellency test results of PET (fabric) (weight: 88 $g/m^2$, 70 denier, gray) treated with the same aqueous dispersions are shown in Table 4. The slippage resistance (slip resistance) test was conducted in accordance with JIS-L-1096 B method except that the predetermined load was 60 N.

<Comparative Examples 5 and 6>

Aqueous dispersions were adjusted so that the solid content of the binders synthesized in Synthesis Examples B1 and B3 was the predetermined amount shown in Table 4. The cross-linking agent 2 was added to the aqueous dispersion in an amount of 17% solids content based on the solids content of the binder. The value of the slippage resistance test of PET (fabric) (white) treated with the prepared aqueous dispersion and the water-repellency and strong water-repellency test results, and the water-repellency and strong water-repellency washing durability test results of PET (fabric) (weight: 88 $g/m^2$, 70 denier, gray) treated with the same aqueous dispersions are shown in Table 4. The slippage resistance test was conducted with a predetermined load of 60 N.

[Table 4]

| | Particles | Binder | Aqueous dispersion composition | | Water-repellency | Strong water-repellency | Water-repellency (after washing) | Strong water-repellency (after washing) | Slippage resistance test [mm] |
|---|---|---|---|---|---|---|---|---|---|
| | | | Particle solid content % | B1 solid content % | | | | | |
| Com. Ex. 5 | - | B1 | - | 0.9 | 100 | - | - | - | 21.0 |
| Ex. 36 | Syn.Ex. 16 | B1 | 0.045 | 0.9 | 100 | - | - | - | 18.0 |
| Ex. 37 | Syn.Ex. 16 | B1 | 0.09 | 0.9 | 100 | - | - | - | 17.0 |
| Ex. 38 | Syn. Ex. 16 | B1 | 0.135 | 0.9 | 100 | - | - | - | 17.0 |
| Ex. 39 | Syn. Ex. 17 | B1 | 0.045 | 0.9 | 100 | - | - | - | 17.0 |
| Ex.40 | Syn. Ex. 17 | B1 | 0.09 | 0.9 | 100 | - | - | - | 17.0 |
| Ex. 41 | Syn. Ex. 17 | B1 | 0.135 | 0.9 | 100 | - | - | - | 14.0 |
| Com.Ex. 6 | - | B3 | - | 0.9 | 100 | - | - | - | 18.0 |
| Ex. 42 | Syn. Ex. 16 | B3 | 0.045 | 0.9 | 100 | - | - | - | 17.0 |
| Ex. 43 | Syn. Ex. 16 | B3 | 0.09 | 0.9 | 100 | - | - | - | 16.0 |
| Ex. 44 | Syn. Ex. 16 | B3 | 0.135 | 0.9 | 100 | - | - | - | 16.0 |
| Ex. 45 | Syn. Ex. 17 | B3 | 0.045 | 0.9 | 100 | - | - | - | 15.0 |
| Ex. 46 | Syn. Ex. 17 | B3 | 0.09 | 0.9 | 100 | - | - | - | 15.0 |

(continued)

| | Particles | Binder | Aqueous dispersion composition | | Water-repellency | Strong water-repellency | Water-repellency (after washing) | Strong water-repellency (after washing) | Slippage resistance test [mm] |
|---|---|---|---|---|---|---|---|---|---|
| | | | Particle solid content % | B1 solid content % | | | | | |
| Ex. 47 | Syn. Ex. 17 | B3 | 0.135 | 0.9 | 100 | - | - | - | 13.0 |
| Ex. 48 | Syn.Ex. 15 | B1 | 0.09 | 0.81 | 100 | - | 90 | - | 13.0 |
| Ex. 49 | Syn. Ex. 15 | B1 | 0.18 | 0.72 | 100 | - | as | - | 10.0 |
| Ex. 50 | Syn. Ex. 15 | B1 | 0.27 | 0.63 | 100 | - | 85 | - | 10.0 |
| Ex.51 | Syn. Ex. 16 | B1 | 0.09 | 0.81 | 100 | - | 80 | - | 15.0 |
| Ex. 52 | Syn. Ex. 16 | B1 | 0.18 | 0.72 | 100 | - | 80 | - | 15.0 |
| Ex. 53 | Syn.Ex. 16 | B1 | 0.27 | 0.63 | 100 | - | 80 | - | 12.0 |
| Ex. 54 | Syn. Ex. 17 | B1 | 0.09 | 0.81 | 100 | - | 90 | - | 15.0 |
| Ex. 55 | Syn. Ex. 17 | B1 | 0.18 | 0.72 | 100 | - | 85 | - | 12.0 |
| Ex.56 | Syn. Ex. 17 | B1 | 0.27 | 0.63 | 100 | - | 80 | - | 11.0 |

Industrial Applicability

The organic fine particles of the present disclosure can be used as a water-repellent agent, an oil-repellent, a soil resistant agent, a soil release agent, a release agent, or a mold release agent that have a slip prevention effect. The organic fine particles of the present disclosure can be used as an anti-slip agent. Particularly preferred applications of the organic fine particles are fabrics for clothing, fabrics for outdoor and sporting goods.

## Claims

1. An organic fine particle capable of being present on a substrate in a state of having a particle shape, wherein the organic fine particle exhibits a slip-resistant effect on the substrate.

2. The organic fine particle according to claim 1, wherein a slip resistance on the substrate is 8.0 mm or less.

3. The organic fine particle according to claim 1 or 2, satisfying at least any one of:

   (i) when the organic fine particle is adhered to a fabric, a contact angle of water on the fabric to which the organic fine particle is adhered is 120 degrees or more;
   (ii) when the organic fine particle is adhered to a fabric, a falling speed on the fabric to which the organic fine particle is adhered is 100 mm/s or more; and
   (iii) when the organic fine particle is adhered to a fabric, a water-repellency test result on the fabric to which the organic fine particle is adhered is 80 points or more.

4. The organic fine particle according to any one of claims 1 to 3, wherein a particle size of the fine particle observable on the fabric is 50 to 700 nm.

5. The organic fine particle according to any one of claims 1 to 4, comprising a polymer comprising a repeating unit formed from:

   (I) a hydrophobic monomer having one ethylenically unsaturated double bond and at least one hydrocarbon group having 3 to 40 carbon atoms.

6. An organic fine particle comprising a polymer comprising a repeating unit formed from:

   (I) a hydrophobic monomer having one ethylenically unsaturated double bond and at least one branched or cyclic hydrocarbon group having 3 to 40 carbon atoms; and
   (II) a crosslinkable monomer having at least two ethylenically unsaturated double bonds.

7. An organic fine particle comprising a polymer comprising a repeating unit formed from:

   (I) a hydrophobic monomer having one ethylenically unsaturated double bond and at least one branched or cyclic hydrocarbon group having 3 to 40 carbon atoms,

   wherein a high glass transition point monomer which forms a homopolymer having a glass transition point of 100°C or more among the hydrophobic monomers (I) is 20 mol% or more.

8. The organic fine particle according to any one of claims 5 to 7, wherein the polymer further comprises a repeating unit formed from at least one monomer selected from the group consisting of:

   (III) a reactive/hydrophilic monomer having one ethylenically unsaturated double bond and at least one reactive group and/or hydrophilic group, or a short-chain hydrocarbon-containing monomer having one ethylenically unsaturated double bond and at least one hydrocarbon group having 1 or 2 carbon atoms; and/or
   (IV) a (meth)acrylic monomer having a linear hydrocarbon group having 3 to 40 carbon atoms or a polydimethylsiloxane group.

9. The organic fine particle according to any one of claims 5 to 8, wherein in the hydrophobic monomer (I), the branched hydrocarbon group has 3 to 11 carbon atoms and the cyclic hydrocarbon group has 4 to 15 carbon atoms.

**10.** The organic fine particle according to any one of claims 5 to 9, wherein the hydrophobicmonomer (I) is a monomer represented by the formula:

$CH_2=C(-R^{12})-C(=O)-Y^{11}(R^{11})_k$

or

$CH_2=C(-R^{14})-Y^{12}(H)_{5-l}(R^{13})_l$

wherein $R^{11}$ and $R^{13}$ are each independently a branched or cyclic hydrocarbon group having 3 to 40 carbon atoms;
$R^{12}$ and $R^{14}$ are a hydrogen atom, a monovalent organic group, or a halogen atom;
$Y^{11}$ is -O-, -, or -NR'-, wherein R' is H or a hydrocarbon group having 1 to 4 carbon atoms;
$Y^{12}$ is a benzene ring;
H is a hydrogen atom;
H and $R^{13}$ are each directly bonded to $Y^{12}$; and
k is 1 to 3 and l is 0 to 3,
the crosslinkable monomer (II) is a monomer represented by the formula:

formula:

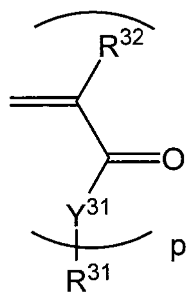

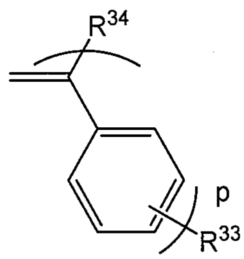

or

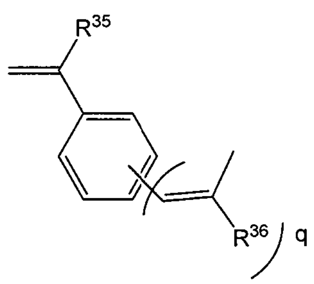

wherein $R^{31}$ and $R^{33}$ are each independently a divalent to tetravalent group composed of at least one selected from a direct bond, a hydrocarbon group having 1 to 20 carbon atoms optionally including a hydrocarbon moiety having an -OH group, $-(CH_2CH_2O)r-$ wherein r is an integer of 1 to 10, $-C_6H_4-$, -O-, or -NR'- wherein R' is H or a hydrocarbon group having 1 to 4 carbon atoms;

$R^{32}$, $R^{34}$, $R^{35}$, and $R^{36}$ are each independently a hydrogen atom, a monovalent organic group, or a halogen atom;
$Y^{31}$ is -O- or -NR'-, wherein R' is H or a hydrocarbon group having 1 to 4 carbon atoms;
p is 2 to 4; and
q is 1 to 5,
the reactive/hydrophilic monomer (III) is a monomer represented by the formula:
formula:

$$CH_2=C(-R^{42})-C(=O)-Y^{41}-(R^{43})_o(R^{41})_t$$

or

$$CH_2=C(-R^{45})-Y^{42}-(H)_{5-n}(R^{44})_u$$

wherein $R^{41}$ and $R^{44}$ are each independently a reactive group or a hydrophilic group;
$R^{42}$ and $R^{45}$ are a hydrogen atom, a monovalent organic group, or a halogen atom;
$Y^{41}$ is a direct bond, -O- or -NR'-, wherein R' is H or a hydrocarbon group having 1 to 4 carbon atoms;
$R^{43}$ is a group having a direct bond, -O-, or a divalent to tetravalent hydrocarbon group having 1 to 10 carbon atoms optionally including a hydrocarbon moiety having an -OH group;
$Y^{42}$ is a benzene ring;
H is a hydrogen atom;
H and $R^{44}$ are each directly bonded to $Y^{42}$;
t and u are 1 to 3; and
o is 0 or 1,
or
the short-chain hydrocarbon-containing monomer (III) is a monomer represented by the formula:

$$CH_2=C(-R^{47})-C(=O)-Y^{43}-R^{46}$$

wherein $R^{46}$ is a hydrocarbon group having 1 or 2 carbon atoms;
$R^{47}$ is a hydrogen atom, a monovalent organic group, or a halogen atom; and
$Y^{43}$ is a direct bond, -O- or -NR'-, wherein R' is H or a hydrocarbon group having 1 to 4 carbon atoms, and
the (meth)acrylic monomer (IV) is a (meth)acrylic monomer having a linear hydrocarbon group having 3 to 40 carbon atoms and represented by the formula:

$$CH_2=C(-R^{52})-C(=O)-Y^{51}(R^{51})_s$$

wherein $R^{51}$ is each independently a linear hydrocarbon group having 3 to 40 carbon atoms;
$R^{52}$ is a hydrogen atom, a monovalent organic group, or a halogen atom;
$Y^{51}$ is a divalent to tetravalent group composed of at least one selected from a divalent to tetravalent hydrocarbon group having 1 carbon atom, $-C_6H_4-$, -O-, - C(=O)-, $-S(=O)_2-$, or -NR'-, wherein R' is H or a hydrocarbon group having 1 to 4 carbon atoms, provided that the case of only a divalent hydrocarbon group is excluded; and
s is 1 to 3,
or a (meth)acrylic monomer having a polydimethylsiloxane group and represented by the formula:

$$CH_2=C(-R^{62})-C(=O)-Y^{61}-R^{61}$$

wherein $R^{61}$ is a group having a polydimethylsiloxane group;
$R^{62}$ is a hydrogen atom, a monovalent organic group, or a halogen atom; and
$Y^{61}$ is a divalent to tetravalent group composed of at least one selected from a divalent to tetravalent hydrocarbon group having 1 carbon atom, $-C_6H_4-$, -O-, - C(=O)-, $-S(=O)_2-$, or -NR'-, wherein R' is H or a hydrocarbon group having 1 to 4 carbon atoms.

**11.** The organic fine particle according to any one of claims 8 to 10, wherein, in the reactive monomer (III), the reactive group is an epoxy group, a chloromethyl group, a bromomethyl group, an iodomethyl group, or a blocked isocyanate group, and the hydrophilic group is at least one group selected from the group consisting of a hydroxyl group, an amino group, including those in which H bonded to N is converted to a methyl group, an ethyl group, a propyl group, or a butyl group, a carboxylic acid group, a sulfonic acid group, a phosphoric acid group, an alkaline metal or alkaline earth metal salt group of carboxylic acid, sulfonic acid, or phosphoric acid, an ammonium salt group with a chloride,

bromide or iodide ion as a counter anion, an ethylene glycol group, a polyethylene glycol group, and a group having an acetone skeleton (-C(=O)-$CH_3$), or the reactive/hydrophilic monomer (III) is a (meth)acrylamide having a short chain hydrocarbon group having 6 or less carbon atoms in a side chain.

**12.** The organic fine particle according to any one of claims 5 to 11, wherein the hydrophobic monomer (I) is at least one monomer selected from the group consisting of

t-butyl (meth)acrylate, isopropyl (meth)acrylate, 2,6,8-trimethylnonan-4-yl acrylate,
isobornyl (meth)acrylate, bornyl (meth)acrylate, adamantyl (meth)acrylate, dicyclopentanyl (meth)acrylate, dicyclopentenyl (meth)acrylate, phenyl (meth)acrylate, naphthyl acrylate, benzyl acrylate,
t-butylstyrene, methylstyrene, styrene, cyclohexyl (meth)acrylate, cyclopentyl (meth)acrylate, cyclobutyl (meth)acrylate, cycloheptyl (meth)acrylate, 2,4-di-t-butylstyrene, and 2,4, 6-trimethylstyrene;
the crosslinkable monomer (II) is at least one monomer selected from the group consisting of divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecanedimethanol di(meth)acrylate, dicyclopentanyl di(meth)acrylate, and 5-hydroxy-1,3-adamantane di(meth)acrylate;
the reactive/hydrophilic monomer (III) is at least one monomer selected from the group consisting of glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, a dimethylaminoethyl (meth)acrylate quaternary compound, tetrahydrofurfuryl (meth)acrylate, polyethylene glycol (meth)acrylate, diacetone (meth)acrylamide, isopropyl (meth)acrylamide, t-butyl (meth)acrylamide, ethyl (meth)acrylamide, methyl (meth)acrylamide, and
4-hydroxymethylstyrene, 4-hydroxyethylstyrene, 4-aminomethylstyrene, 4-aminoethylstyrene, 2-(4-vinylphenyl)oxirane, and 2-(4-vinylbenzoyl)oxirane;
the short-chain hydrocarbon group-containing monomer (III) is at least one monomer selected from the group consisting of methyl methacrylate, ethyl methacrylate, α-chloromethyl acrylate, and α-chloroethyl acrylate; and
the (meth)acrylic monomer (IV) is at least one monomer selected from the group consisting of
stearyl (meth)acrylate, stearyl amidoethyl (meth) acrylate, $CH_2=CHC(=O)OC_2H_4NHC(=O)C_{17}H_{35}$, $CH_2=CHC(=O)OC_2H_4NHSO_2C_{18}H_{37}$, $CH_2=CHC(=O)OC_2H_4NHC(=O)OC_{18}H_{37}$, $CH_2=CHC(=O)OC_2H_4OC(=O)NHC_{18}H_{37}$, $CH_2=CHC(=O)OC_2H_4NHC(=O)NHC_{18}H_{37}$,

the formula:

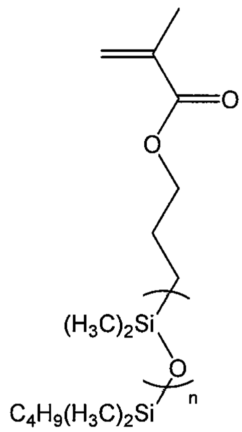

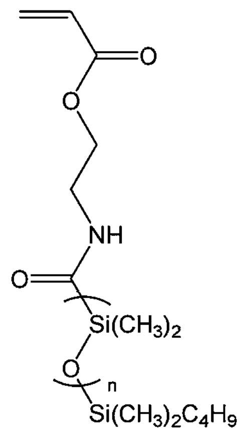

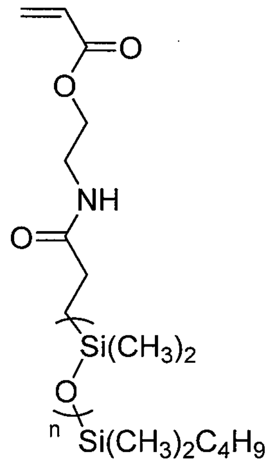

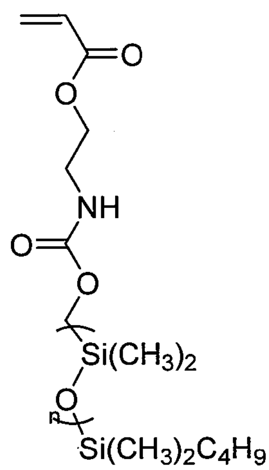

or

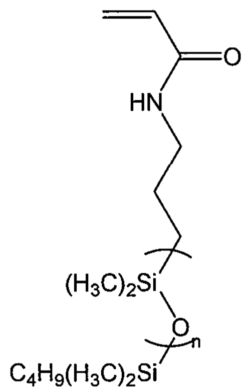

wherein n is a number of 1 to 500.

**13.** The organic fine particle according to any one of claims 5 to 12, satisfying at least any one of:

(i) a molar ratio of the hydrophobic monomer (I)/the reactive/hydrophilic monomer and/or the short-chain hydrocarbon group-containing monomer (III) is 100/0 to 50/50;
(ii) the crosslinkable monomer (II) is 0.1 to 30 parts by mol based on 100 parts by mole in total of the hydrophobic monomer (I), the reactive/hydrophilic monomer and/or the short-chain hydrocarbon group-containing monomer (III), and the (meth)acrylic monomer (IV); or
(iii) the (meth)acrylic monomer (IV) is 0 to 30 parts by mol based on 100 parts by mole in total of the hydrophobic monomer (I) and the reactive/hydrophilic monomer and/or the short-chain hydrocarbon group-containing monomer (III).

**14.** An anti-slip agent comprising the organic fine particle according to any one of claims 1 to 13.

**15.** Use of the organic fine particle according to any one of claims 1 to 13 as an anti-slip agent.

**16.** An anti-slip agent composition comprising:

(A) the organic fine particle according to any one of claims 1 to 13; and
(B) an aqueous medium.

**17.** The anti-slip agent composition according to claim 16, wherein an amount of the organic fine particle (A) is 50% by weight or less based on the anti-slip agent composition.

**18.** The anti-slip agent composition according to claim 16 or 17, further comprising any one or more of (C) a binder resin, (D) a surfactant, and (E) a cross-linking agent.

**19.** The anti-slip agent composition according to claim 18, wherein the binder resin (C) is at least one polymer selected from a non-fluorine polymer having a hydrocarbon group having 3 to 40 carbon atoms in a side chain and a fluorine-containing polymer having a fluoroalkyl group having 1 to 20 carbon atoms in a side chain.

**20.** The anti-slip agent composition according to claim 18 or 19, wherein the binder resin (C) is an acrylic polymer, a urethane polymer, a polyolefin, a polyester, a polyether, a polyamide, a polyimide, a polystyrene, a silicone polymer, or a combination thereof.

**21.** The anti-slip agent composition according to any one of claims 18 to 20, wherein a weight ratio of the binder resin (C)/the organic fine particle (A) is 20/80 to 99/1, or an amount of the binder resin (C) is 30 to 99% by weight based on a total weight of the binder resin (C) and the organic fine particle (A) of 100.

**22.** A method for producing the anti-slip agent composition according to any one of claims 16 to 21, comprising: polymerizing a monomer in an aqueous medium in the presence of a surfactant in an amount of 30 parts by weight or less based on 100 parts by weight of the monomer to obtain an aqueous dispersion of an organic fine particle (A).

23. The production method according to claim 22, further comprising:
adding an aqueous dispersion of the binder resin (C) to an aqueous dispersion of the organic fine particle (A), or polymerizing a monomer for the binder resin in the aqueous dispersion of the organic fine particle (A) to obtain the binder resin (C), or polymerizing a monomer for the organic fine particle in the aqueous dispersion of the binder resin, to thereby obtain the aqueous dispersion in which the organic fine particle (A) and the binder resin (C) are dispersed.

24. A method for treating a textile product, comprising applying a treatment liquid containing the anti-slip agent composition according to any one of claims 16 to 21 to the textile product.

25. A textile product to which the anti-slip agent composition according to any one of claims 16 to 21 is applied.

26. The textile product according to claim 25, wherein a slip resistance is 8.0 mm or less.

27. The textile product according to claim 25 or 26, wherein the textile product is fabric for clothing, outdoor equipment, and sporting goods.

## INTERNATIONAL SEARCH REPORT

International application No.
**PCT/JP2021/047984**

**A. CLASSIFICATION OF SUBJECT MATTER**

***C08F 220/10***(2006.01)i; ***C08L 33/04***(2006.01)i; ***C08L 101/00***(2006.01)i; ***D06M 15/263***(2006.01)i; ***A41D 31/00***(2019.01)i; ***A41D 31/04***(2019.01)i; ***A41D 31/10***(2019.01)i
FI: C08F220/10; C08L33/04; C08L101/00; D06M15/263; A41D31/04 Z; A41D31/10; A41D31/00 503

According to International Patent Classification (IPC) or to both national classification and IPC

**B. FIELDS SEARCHED**

Minimum documentation searched (classification system followed by classification symbols)

C08F220/10; C08L33/04; C08L101/00; A41D31/00; A41D31/04; A41D31/10; D06M15/263

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-224427 A (TORAY IND., INC.) 06 September 2007 (2007-09-06)<br>claims, paragraphs [0020], [0028], examples | 1, 2, 4, 5, 14-18, 20, 21, 24-27<br>3, 6-13, 19, 22, 23 |
| A | JP 2001-049133 A (TOYOTA CENTRAL RES. & DEV. LAB., INC.) 20 February 2001 (2001-02-20)<br>entire text | 1-27 |
| A | WO 2020/075766 A1 (DAIKIN INDUSTRIES, LTD.) 16 April 2020 (2020-04-16)<br>entire text | 1-27 |
| A | WO 2020/137902 A1 (DAIKIN INDUSTRIES, LTD.) 02 July 2020 (2020-07-02)<br>entire text | 1-27 |
| A | WO 2017/126358 A1 (TORAY IND., INC.) 27 July 2017 (2017-07-27)<br>entire text | 1-27 |
| A | WO 2015/083627 A1 (TORAY IND., INC.) 11 June 2015 (2015-06-11)<br>entire text | 1-27 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2021/047984

C. DOCUMENTS CONSIDERED TO BE RELEVANT

| Category* | Citation of document, with indication, where appropriate, of the relevant passages | Relevant to claim No. |
|---|---|---|
| A | JP 6-055695 A (DAINIPPON INK & CHEM., INC.) 01 March 1994 (1994-03-01) entire text | 1-27 |
| A | JP 2010-530907 A (CONSTRUCTION RESEARCH & TECHNOLOGY GMBH) 16 September 2010 (2010-09-16) entire text | 1-27 |
| A | JP 2009-531489 A (WACKER CHEMIE AG) 03 September 2009 (2009-09-03) entire text | 1-27 |
| A | JP 7-207579 A (KANEBO LTD.) 08 August 1995 (1995-08-08) entire text | 1-27 |

Form PCT/ISA/210 (second sheet) (January 2015)

**INTERNATIONAL SEARCH REPORT**
**Information on patent family members**

International application No.
**PCT/JP2021/047984**

| Patent document cited in search report | Publication date (day/month/year) | Patent family member(s) | Publication date (day/month/year) |
|---|---|---|---|
| JP 2007-224427 A | 06 September 2007 | (Family: none) | |
| JP 2001-049133 A | 20 February 2001 | US 6503962 B1<br>entire text<br>EP 1008623 A1 | |
| WO 2020/075766 A1 | 16 April 2020 | JP 2020-59800 A<br>CN 112823170 A<br>KR 10-2021-0055748 A | |
| WO 2020/137902 A1 | 02 July 2020 | (Family: none) | |
| WO 2017/126358 A1 | 27 July 2017 | TW 201736667 A | |
| WO 2015/083627 A1 | 11 June 2015 | (Family: none) | |
| JP 6-055695 A | 01 March 1994 | (Family: none) | |
| JP 2010-530907 A | 16 September 2010 | US 2010/0190888 A1<br>entire text<br>WO 2008/151878 A1<br>EP 2167443 A1<br>CN 101679118 A | |
| JP 2009-531489 A | 03 September 2009 | (Family: none) | |
| JP 7-207579 A | 08 August 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015178471 A
- US 8703894 B
- US 20140295724 A
- JP 2019519653 T
- WO 2018007549 A
- JP 2012522062 T
- WO 2010115496 A
- JP 2017025440 A
- WO 2017014131 A